# EUROPEAN PATENT APPLICATION

(11) **EP 2 469 263 A1**
(43) Date of publication of application: **27.06.2012**
(21) Application number: 12001067.3
(22) Date of filing: 12.01.2007
(51) Int. Cl.: G01N 1/31, G01N 1/28, G01N 1/30

(54) **Biological sample processing composition and method**

(30) Priority: 13.01.2006 US 759240 P
(62) Divisional of application: 07718114.7
(71) Applicant: Ventana Medical Systems, Inc., Tucson, Arizona 85755 (US)
(72) Inventor: Farrell, Michael, Tucson, AZ 85704 (US); Bieniarz, Christopher, Tucson, AZ 85718 (US); Reinhardt, Kurt, Tucson, AZ 85750 (US); Ward, Glenn, Tucson, AZ 85741 (US); Kosmeder, Jerome, W., Tucson, AZ 85750 (US); Ghusson, Andrew, Tucson, AZ 85737 (US); Walk, Eric Eng, Tucson, AZ 85750 (US); Manriquez, Guadalupe, H., Tucson, AZ 85750 (US); Grogan, Thomas, M., Tucson, AZ 85719 (US)
(74) Representative: Müller-Boré & Partner Patentanwälte

(57) **Abstract**

The present invention relates to a method of processing a biological sample on a microscope slide.

## Description

### Related Application

This claims the benefit of U.S. Provisional Patent Application No. 60/759,240, filed January 13, 2006, which application is incorporated by reference herein.

### Field

The present invention relates to a composition and method for processing biological samples such as cells and tissue for microscopic examination. More particularly, the present invention relates to a composition and a method that can increase the contrast, color balance and the amount of cellular detail that is observable in a stained cell or tissue sample. Furthermore, the present invention relates to a composition and method that can preserve and/or restore biological samples that are treated with elevated temperatures under conditions that promote evaporation of solvents therefrom.

### Background

Most cells and tissues lack sufficient inherent color and contrast for detailed microscopic analysis of their morphology. As a consequence, cells and tissues are routinely stained with one or more colored dyes to enhance contrast between cells and between sub-cellular features. The features revealed by staining are used to diagnose a wide variety of diseases and conditions.

As an adjunct to many typical staining processes, a cell or tissue sample is contacted with a variety of solvents and solvent mixtures (solvents). Solvents are used, for example, to de-paraffinize a paraffin-embedded sample, prepare a sample for treatment with a non-polar dye, or prepare a sample for coverslipping. Many solvents, like ethanol, limonene, xylene and aqueous detergent solutions tend to extract lipidic compounds from cell membranes. As a consequence, cell morphology can be altered and cells can become more susceptible to damage during processing, especially if they are processed at elevated temperatures to help evaporate solvents. Thus, there is a need for methods and compositions that help protect cell and tissue samples from damage during processing, and that can help restore damaged or altered cellular structures. Furthermore, there is a need for methods and compositions that increase the clinical utility of histologically stained samples by increasing the contrast, color balance and amount of cellular detail observable in a sample.

### Summary

A composition and method are disclosed that include a lipid compound to facilitate preservation, restoration and/or enhancement of observable cell and tissue morphology in stained biological samples. For example, the composition and method can provide increased clarity and definition of cellular and sub-cellular structures, making it possible for an observer to more easily discriminate different tissue elements and visualize fine micro-anatomical details in a sample. Cellular structures such as membranes and nuclear features can become distinctly visible in an H&E stained tissue section that has been contacted with a lipid compound. Furthermore, contrast and color balance in H&E stained samples can be improved according to the disclosure. The enhancement of detail and improvements in contrast and color balance can be helpful in making a diagnosis from a stained biological sample.

In one aspect, a method is disclosed for treating a biological sample that increases cellular and sub-cellular definition, and improves sample contrast and color balance. In a particular embodiment, the method includes applying a coverslipping composition to a stained sample where the coverslipping composition includes a coverslipping solvent and a lipid compound. Once the coverslipping composition is applied, a coverslip is placed over the sample. Due to the lipid compound included in the coverslipping composition, increased contrast and cellular and sub-cellular definition, increased contrast and improved color balance can be observed in comparison to a substantially similar sample that is coverslipped using the coverslipping solvent alone. Used in combination with an automated staining technique that utilizes fresh reagents for each slide stained, contacting a sample with a lipid compound during an automated process (such as at the coverslipping step) can provide slides with increased clinical utility.

In another aspect, a coverslipping composition is disclosed that includes a coverslipping solvent and a lipid compound. The lipid compound in the coverslipping composition can be a detergent lipid compound or a non-detergent lipid compound. Useful non-detergent lipid compounds include one or more of a fatty acid, a fatty acid ester, a fatty alcohol, a fatty amine, a fatty ether, a polysiloxane, a polyether, and an isoprenoid.

In yet a further aspect, a method is disclosed for processing a biological sample on a microscope slide where the biological sample is exposed to an elevated temperature under conditions that promote evaporation of a solvent from the sample. In this aspect the method includes treating the sample with a histochemical process to provide a stained sample, exposing the sample to an elevated temperature under conditions that promote evaporation of solvents from the sample, and contacting the sample with a lipid compound. In particular embodiments, the sample is exposed to one or more lipid-extracting solvents during the histochemical process, and the biological sample is treated with the lipid compound to replace at least a portion of the lipid content of the sample removed during processing. "Re-lipidization" of the sample restores tissue morphology obscured during processing and provides a number of benefits, including prevention (and/or removal) of artifacts and morphological changes induced by exposing the sample to the elevated temperature and evaporative conditions. Addition of a lipid compound also can simultaneously increase the cellular and sub-cellular definition observable by brightfield microscopy.

### Brief Description of the Drawings

FIG. 1 is a schematic diagram showing an automated H&E process incorporating a lipid compound in a coverslipping step.
FIGS. 2A-2I are a series of photomicrographs showing increased definition and fewer nuclear drying artifacts in automated H&E stained liver tissue samples contacted with a lipid compound during a coverslipping step, along with an H&E stained sample that has not been contacted with a lipid compound for reference (2A).
FIG. 3 is a schematic diagram illustrating an automated H&E staining process incorporating a lipid compound in either or both of an alcohol or a limonene solution.
FIG. 4 is a schematic diagram illustrating an automated H&E staining process that incorporates a fatty alcohol in a coverslipping solution.
FIGS. 5A and 5B are a pair ofphotomicrographs illustrating the enhanced definition of cellular and sub-cellular features that are provided by contacting an H&E stained sample with a fatty alcohol.
FIG. 6 is a schematic diagram illustrating an automated H&E staining process used to evaluate a variety of lipid compounds/compositions for use in an embodiment of the disclosed method.
FIG. 7 is a series of representative photomicrographs demonstrating the increased definition, contrast and color balance afforded by an embodiment of the disclosed method.

### Detailed Description of Several Illustrative Embodiments

Further aspects of the invention are illustrated by the following non-limiting descriptions and examples, which proceed with respect to the abbreviations and terms provided after the overview that follows.

### I. Overview

In one aspect, a method is disclosed for increasing the cellular and sub-cellular definition that is observable in a stained biological sample and/or decreasing the number of artifacts introduced by exposing the sample to an elevated temperature, particularly where the sample also is exposed to conditions that promote evaporation of a solvent from the sample. The method includes contacting the sample with a lipid compound, which compound can be a detergent lipid compound or a non-detergent lipid compound.

In one embodiment, a method is disclosed for staining a biological sample that includes contacting the sample with one or more histological stains and contacting the sample with a lipid compound composition (such as during a coverslipping step), wherein the lipid compound composition consists essentially of a lipid compound and either a lower alkanol or a coverslipping solvent (which could, for example, also be used in a clearing step instead of a coverslipping step in some staining protocols). The lipid compound in the composition can, in particular embodiments, have a water solubility of less than about 1.0 g/mL at about 20°C, and more particularly can be a non-detergent lipid compound. In other particular embodiments, the biological sample can be a waxembedded biological sample, and contacting the sample with a lipid compound composition can be performed after the sample has been de-waxed. In still other particular embodiments, contacting the sample with one or more histological stains can consist essentially of contacting the biological sample with hematoxylin and eosin. The method can be manual or automated, and where a plurality of samples are stained, fresh reagent can be used for each sample. Particular examples of useful classes of lipid compounds include a detergent, a fatty acid, a fatty acid ester, a fatty alcohol, a fatty amine, a fatty ether, a polysiloxane, a polyether, and an isoprenoid. In particular embodiments, the lipid compound can be one or more of a C8 to C20 fatty alcohol, for example, one or more of a C8 to C20 unsaturated fatty alcohol. Typically, the lipid compound composition will include from about 0.5% to about 35% of the lipid compound. In other particular embodiments, the lipid compound is dissolved in one or more of an aliphatic hydrocarbon, an aromatic hydrocarbon or a terpene (such as limonene).

In another embodiment, the disclosed method is a method of coverslipping a stained biological sample (such as a histologically stained tissue or cytology sample) on a microscope slide so that increased contrast and cellular and sub-cellular definition can be observed in the sample. In particular embodiments of the disclosed method, the lipid compound comprises one or more of a fatty alcohol, a detergent, a fatty acid, a fatty acid ester, , a fatty amine, a fatty ether, a polysiloxane, a polyether, and an isoprenoid. In particular embodiments, the lipid compound is a non-detergent lipid compound.

The disclosed coverslipping embodiment includes applying a coverslipping composition to the sample and coverslipping the sample to which the composition has been applied. The coverslipping composition comprises a coverslipping solvent (such as one or more of an aliphatic hydrocarbon, an aromatic hydrocarbon and a terpene) and a lipid compound. When treated by this method, the coverslipped sample exhibits increased contrast and cellular and sub-cellular definition compared to a substantially similar sample that is coverslipped using the coverslipping solvent alone. In particular embodiments, the coverslipping solvent includes one or more of an alkane, a mixture of alkanes, limonene, xylene and toluene. The lipid compound can be dissolved in the coverslipping solvent at any concentration between about 0.5% and about 50%, but typically the lipid compound is dissolved in the coverslipping solvent at a concentration from about 0.5% to about 35%, for example, a concentration from about 1% to about 25%. In particular embodiments, the lipid compound can be a lipid compound that has a water solubility of less than about 1g/L at about 20°C. In other particular embodiments, the lipid compound can have a boiling point of greater than about 200°C.

The method can be practiced manually, incorporated into an automated process or any combination thereof, and the method can be utilized with "pre-glued" coverslips or the coverslipping composition can further include an adhesive. Typically, the coverslipping composition will have a refractive index that is close to that of tissue. Suitable coverslipping adhesives include cyanoacrylate glues and light-curable adhesive polymers (such as visible and UV-curable adhesives). Commercially available coverslipping glues can be obtained, for example, from Ted Pella, Inc. (Redding, CA). UV-curable adhesives include CureMount^{™}, available from Instrumedics, Inc. (St. Louis, MO) and various UV- and Visible-curable polymers are available from Henkel Loctite Corporation (Rocky Hill, CT).

In another aspect, a coverslipping composition is disclosed that includes a coverslipping solvent and a lipid compound, each of which can be as described above. In a particular embodiment, the coverslipping composition consists essentially of a coverslipping solvent and a lipid compound. In another particular embodiment, the coverslipping solvent includes a coverslipping adhesive. In yet another particular embodiment, the coverslipping composition consists essentially of a coverslipping solvent, a lipid compound and a coverslipping glue.

In another aspect, a method of processing a biological sample is disclosed that includes treating the sample using a histochemical technique (for example, a histological staining process such as an H&E staining process) to provide a stained biological sample, exposing the sample to an elevated temperature under conditions that promote evaporation of a solvent from the sample, and contacting the sample with a lipid compound before, during or after exposing the sample to the elevated temperature and evaporative conditions. The sample can be exposed for a time sufficient to remove at least a portion of a solvent overlying at least a portion of the sample, and/or the sample can be exposed for a time sufficient to remove at least a portion of a solvent that has been absorbed into the sample during processing. The lipid compound can be as described above, and can substantially remain on and within the sample to help prevent damage during the evaporative process, or can be added after the evaporative process to reverse damage done to the sample during the evaporative process. A lipid compound can be used to protect or restore a sample during or after an evaporative process at an elevated temperature where a volatile solvent such as a lower alkanol like ethanol is rapidly evaporated from the sample.

An elevated temperature and conditions that promote evaporation of a solvent from the sample can be provided by any type of oven or heating device in combination with a passive (such as convective air flow) or an active means of gas exchange above a sample held on a microscope slide. Conditions that promote evaporation of a solvent from a sample provide a net reduction in the amount of solvent in and/or on a sample through evaporative means. In particular embodiments, the sample is dried in a convection oven and/or using a radiant heater, optionally in combination with a means to actively promote gas flow (such as air flow) across the sample surface (such as a fan or a compressed gas source) as an aid to the evaporative process.

Typically, exposing the sample to an elevated temperature under conditions that promote evaporation of a solvent from the sample includes removing at least 25% of the solvent from the sample, for example, at least 50% of solvent, at least 90% of the solvent, or at least 95% of the solvent. Solvent in a liquid phase overlying the sample can be substantially removed while only a portion of the solvent that has been absorbed by the sample is removed. Where solvent is significantly removed from the sample itself by the evaporative process (which leads to "drying" of the sample and possibly associated artifacts), contacting the sample with a lipid compound can be especially useful for protecting or restoring the cellular and sub-cellular structure of the sample. The temperature and time of heating that is useful to remove a given amount of solvent from a sample can be easily determined by empirical means.

In particular embodiments, the solvent that is evaporated from a sample in an evaporative process can comprise a lower alkanol (a C1-C5 primary, secondary or tertiary alcohol such as methanol, ethanol, n-propanol, isopropanol, n-butanol, isobutanol, t-butanol or neo-pentanol) and/or a terpene (such as a volatile terpene like limonene). When multiple particular solvent compounds are present in and/or on a sample, it is possible to preferentially remove one or more of the particular solvents according to their relative volatilities (vapor pressures) with those solvents having higher volatilities (and vapor pressures at a given temperature) being preferentially removed. Water contained in a sample also can be removed by such a process, but typically will be removed to a lesser extent that the more volatile solvents utilized in may sample processing protocols. The lipid compound itself typically has a vapor pressure that is substantially lower than water and the solvent being removed, and thus, if present during the evaporative process, will remain on and/or in the sample.

The lipid compound used to protect or restore a sample exposed to an elevated temperature and conditions that promote evaporation of a solvent is typically applied in solution, for example, a solution of the lipid compound in an organic solvent such as an alkanol (for example, ethanol), an aliphatic hydrocarbon (for example, an alkane), a terpene (such as limonene) or an aromatic hydrocarbon (for example, toluene or xylene). Other organic solvents such as volatile ethers and esters can be employed in certain embodiments.

In general, it is desirable for a variety of reasons to use a process that leaves an amount of a lipid compound on a sample that provides sample coverage and one or more of protection, restoration and definition enhancement, but that does not interfere with the coverslip curing process (for example, by preventing the coverslipping glue from curing properly) or leaving an undesirable oily residue on a slide. Therefore, in certain embodiments, a method according to the disclosure will leave at least about I µL but less than about 30 µL (for example, less than about 20 µL such as less than about 10 µL or less than about 5 µL) of a lipid compound on the slide at coverslipping, regardless of where in the process and in what amounts the lipid compound is added prior to or during coverslipping. Thus, if larger amounts of a lipid compound are added at some point in a staining process, it may be desirable to remove some of the lipid compound by one or more rinsing steps using a solvent in which the lipid compound is soluble such as an ethanol/water solution, a surfactant solution, ethanol, limonene or the like. In a process that includes de-paraffinization, it may be desirable to contact the sample with the lipid compound after de-paraffinization, as de-paraffinization solvents will tend to remove the lipid compound from the sample. Likewise, in a process where the sample is dehydrated with ethanol, it may be desirable to contact the sample with the lipid compound after the dehydration step, so that added lipid compound is not removed by the dehydration solvent. In particular embodiments, application of the lipid compound to a sample can occur after de-parrafinizing a paraffin-embedded sample, after a de-paraffinized sample has been cleared of a de-paraffinizing solvent (such as with a detergent solution, limonene, an alkane or a mixture of alkanes), after the sample has been stained using a histochemical technique, during a solvent exchange step just prior to coverslipping, or during coverslipping.

The elevated temperature to which a sample is exposed during an evaporative process is typically between about 35°C and about 140°C, more typically between about 45°C and about 100°C, for example, between about 45°C and about 70°C. A lipid compound will typically have a low vapor pressure at the elevated temperature (for example, a vapor pressure of less than about 200 torr, a vapor pressure of less than about 100 torr or a vapor pressure of less than about 50 torr).

In yet another aspect, a method is disclosed for enhanced histological staining of a de-paraffinized (previously paraffin-embedded) tissue sample that includes contacting the tissue sample with a histological staining solution and contacting the sample with a lipid compound. In one embodiment, contacting the sample with a histological staining solution consists of contacting the sample with a solution consisting essentially of a hematoxylin stain and contacting the sample with a solution consisting essentially of eosin.

The increased definition observed in some embodiments of the disclosed method permits an observer to better discriminate tissue elements and visualize fine micro-anatomical details. There also can be an overall improvement in the contrast and color balance of staining that imparts a sharp outline to tissue features, creating a crisp visual impact. The effect of increased definition can be evident in all tissues and cell types, but is particularly prominent in the following histological contexts for H&E staining:
1. Cell membranes: The cytoplasmic membranes of all cells are highlighted and clearly defined, allowing clear distinction of cellular borders. The effect is especially prominent in epithelial cells such as the secretory cells of prostatic acini and eccrine glands and bile duct epithelial cells.
   Diagnostic applications: paraganglioma and pheochromocytoma, renal chromophobe carcinoma.
2. Nuclear detail: Nuclear features are enhanced with chromatin and heterochromatin showing fine detail. Nucleoli when present are sharp and crisp, with appropriate tinctoral qualities (e.g. eosinophilic nucleoli in Hodgkins lymphoma). Mitoses are clearly visible and prominent.
   Diagnostic applications: high-grade prostatic intraepithelial neoplasia (PIN), prostate cancer, assessment and grading of dysplasia (such as esophageal dysplasia and cervical dysplasia), thyroid papillary carcinoma.
3. Smooth muscle and collagen fibers: Smooth muscle and collagen display a glossy vibrancy allowing crisp visualization of individual fibers (e.g. gastrointestinal smooth muscle, loose collagenous stroma surrounding dermal hair follicles). Basement membrane collagen is prominently highlighted and sharply defined (e.g. eccrine gland basement membranes).
   Diagnostic applications: differentiation of microinvasive carcinoma from *in-situ* carcinoma.
4. Keratin: The eosinophilic staining and visualization of keratin is enhanced. The staining provides more sensitive detection of early keratinization.
   Diagnostic appplications: diagnosis of poorly differentiated squamous cell carcinoma.
5. Subcellular structures: The following subcellular structures are highlighted and appear clearly distinct from other cellular components:
   a. Cilia
      Diagnostic applications: fallopian tube carcinoma, tubal metaplasia.
   b. Brush border
      Diagnostic applications: assessment of duodenal biopsies.
   c. Squamous intercellular bridges
      Diagnostic applications: poorly differentiated squamous cell carcinoma.
   d. Nuclear grooves
      Diagnostic applications: papillary thyroid carcinoma and ovarian granulosa cell tumor.

### II. Abbreviations and Terms

### H&E - hematoxylin and eosin

### TNC - too numerous to count

The terms "a," "an" and "the" include both singular and plural referents unless the context clearly indicates otherwise.

The term "biological sample" refers to any sample that is obtained from or otherwise derived from a biological entity such as an animal. Examples of biological samples include cytology samples, tissue samples and biological fluids. Non-limiting particular examples of biological samples include blood, urine, pre-ejaculate, nipple aspirates, semen, milk, sputum, mucus, pleural fluid, pelvic fluid, sinovial fluid, ascites fluid, body cavity washes, eye brushings, skin scrapings, a buccal swab, a vaginal swab, a pap smear, a rectal swab, an aspirate, a needle biopsy, a section of tissue obtained for example by surgery or autopsy, plasma, serum, spinal fluid, lymph fluid, sweat, tears, saliva, tumors, organs and samples obtained from *in vitro* cell or tissue cultures. Typically, the sample will be a biopsy sample that has been fixed, processed to remove water and embedded in paraffin or other suitable waxy substance for cutting into tissue sections.

The term "coverslipping" refers the th act of placing a coverslip over a sample adhered to a microscope slide, either manually or in an automated fashion.

The term "coverslipping liquid" refers to a liquid (such as a substantially non-polar, organic liquid) that dissolves an adhesive used to adhere a coverslip to the surface of a microscope slide. In some embodiments, a coverslipping solvent can further include a coverslip adhesive (such as a glue or a light-curable polymer, such as a Visible- or UV-curable polymer adhesive) to form a coverslipping composition (that in certain embodiments can further include a lipid compound), but if "pre-glued" coverslips are utilized, it may not be necessary to include an adhesive in the coverslipping solvent beforehand, as the coverslipping solvent will dissolve the adhesive on the pre-glued coverslip to form a coverslipping composition *in situ.* Examples of coverslipping solvents include aromatic hydrocarbons (such as xylene and toluene), aliphatic hydrocarbons (for example, alkanes and alkenes such as C6-C10 alkanes and alkenes and mixtures thereof), terpenes (such as limonene), and combinations thereof. Advantageously, a coverslipping solvent is volatile, meaning that it has significant vapor pressure at room temperature or above such that it will evaporate from a coverslipping composition that includes an adhesive (which can be included in the solvent or formed upon contact of the solvent with the adhesive adhered to a pre-glued coverslip), leaving behind the coverslipping adhesive (and in some embodiments, a lipid compound), which adhesive adheres the coverslip to a substrate. The aforementioned examples of coverslipping solvents are all volatile.

The term "detergent" refers to a surface active compound other than a soap (which is an alkali metal salt of a fatty acid) that has substantial water solubility (such as greater than about 0.05 g/L at 20°C, for example, greater than about 0.5 g/L at 20°C, or greater than about 1 g/L at 20°C) and exhibits significant detergency (cleansing quality or power to solubilize significant amounts of non-polar substances such as oils in water). In contrast to a soap, a detergent is not typically precipitated in the presence of calcium ions such as are found in "hard" water. A detergent can be non-ionic, cationic, anionic or zwitterionic, and can be a mixture of several detergents. Exemplary classes of detergents include alcohol ether sulfates, alcohol sulfates, alkanolamides, alkyl sulfonates, amine oxides, amphoteric detergents, anionic detergents, betaine derivatives, cationic detergents, disulfonates, dodecylbenzene sulfonic acid, ethoxylated alcohols, ethoxylated alkyl phenols, ethoxylated fatty acids, glycerol esters hydrotropes, lauryl sulfates, mono and diglycerides, non-ionic detergents, phosphate esters, quaternary detergents, and sorbitan derivatives. Exemplary non-ionic detergents include BigCHAP(N,N-Bis[3-(D-glucona- mido)propyl]cholamide), Bis(polyethylene glycol bis[imidazoyl carbonyl]), Brij^{®} 30 (Polyoxyethylene 4 lauryl ether) Brij^{®}35 (Polyoxyethylene 23 lauryl ether), Brij^{®}52 (Polyoxyethylene 2 cetyl ether), Brij^{®}56 (Polyoxyethylene 10 cetyl ether), Brij^{®} 58 (Polyoxyethylene 20 cetyl ether), Brij^{®}72 (Polyoxyethylene 2 stearyl ether), Brij^{®}76 (Polyoxyethylene 10 stearyl ether), Brij^{®}78 (Polyoxyethylene 20 stearyl ether), Brij^{®}92 (Polyoxyethylene 2 oleyl ether), Brij^{®}97 (Polyoxyethylene 10 oleyl ether), Brij^{®}98 (Polyoxyethylene 20 oleyl ether), Brij^{®}700 (Polyoxyethylene 100 stearyl ether), Cremophor^{®}EL (castor oil/ethylene oxide polyether), Decaethylene glycol monododecyl ether, octanoyl-N-methylglucamide (MECA-8), decanoyl-N-methylglucamide (MECA-10), n-octylglucoside, n-dodecylglucoside, isotridecyl-poly(ethyleneglycolether)ₙ, N-Decanoyl-N-methylglucamine, n-Decyl-α.-D-glucopyranoside, Decyl-β-D-maltopyranoside, n-Dodecanoyl-N-methylglucamide, n-Dodecyl-α.-D-maltoside, n-Dodecyl-β-D-maltoside, Heptaethylene glycol monodecyl ether, Heptaethylene glycol monotetradecyl ether, n-Hexadecyl-β-D-maltoside, Hexaethylene glycol monododecyl ether, Hexaethylene glycol monohexadecyl ether, Hexaethylene glycol monooctadecyl ether, Hexaethylene glycol monotetradecyl ether, Igepal^{®} CA-630 (Octylphenyl-polyethylene glycol), Igepal^{®} CA-210 (polyoxyethylene(2) isooctylphenyl ether), Igepal^{®} CA-520 (polyoxyethylene(5) isooctylphenyl ether), Igepal^{®}_{'} CO-630 (polyoxyethylene(9)nonylphenyl ether), Igepal^{®}CO-720 (polyoxyethylene(12) nonylphenyl ether), Igepal^{®} CO-890 (polyoxyethylene(40) nonylphenyl ether), Igepal^{®} CO-990 (polyoxyethylene(100) nonylphenyl ether), Igepal^{®} DM-970 (polyoxyethylene(150) dinonylphenyl ether), Methyl-6-O-(N-heptylcarbamoyl- )-.alpha.-D-glucopyranoside, Nonaethylene glycol monododecyl ether, N-Nonanoyl-N-methylglucamine, Octaethylene glycol monodecyl ether, Octaethylene glycol monododecyl ether, Octaethylene glycol monohexadecyl ether, Octaethylene glycol monooctadecyl ether, Octaethylene glycol monotetradecyl ether, Octyl-.beta.-D-glucopyranoside, Pentaethylene glycol monodecyl ether, Pentaethylene glycol monododecyl ether, Pentaethylene glycol monohexadecyl ether, Pentaethylene glycol monohexyl ether, Pentaethylene glycol monooctadecyl ether, Pentaethylene glycol monooctyl ether, Polyethylene glycol diglycidyl ether, Polyethylene glycol ether W-1, Polyoxyethylene 10 tridecyl ether, Polyoxyethylene 100 stearate, Polyoxyethylene 20 isohexadecyl ether, Polyoxyethylene 20 oleyl ether, Polyoxyethylene 40 stearate, Polyoxyethylene 50 stearate, Polyoxyethylene 8 stearate, Polyoxyethylene bis(imidazolyl carbonyl), Polyoxyethylene 25 propylene glycol stearate, Saponin, Span^{®} 20 (Sorbitan monolaurate), Span^{®} 40 (Sorbitan monopalmitate), Span^{®} 60 (Sorbitan monostearate), Span^{®} 65 (Sorbitan tristearate), Span^{®} 80 (Sorbitan monooleate), Span^{®} 85 (Sorbitan trioleate), Tergitol in any form (including Types 15-S-5, 15-S-7, 15-S-9, 15-S-12, 15-S-30, NP-4, NP-7, NP-9, NP-10, NP-40, NPX (Imbentin-N/63), TMN-3 (Polyethylene glycol trimethylnonyl ether), TMN-6 (Polyethylene glycol trimethylnonyl ether), TMN-10 (Polyethylene glycol trimethylnonyl ether), MIN FOAM 1x, and MIN FOAM 2x), Tetradecyl-.beta.-D-maltoside, Tetraethylene glycol monodecyl ether, Tetraethylene glycol monododecyl ether, Tetraethylene glycol monotetradecyl ether, Triethylene glycol monodecyl ether, Triethylene glycol monododecyl ether, Triethylene glycol monohexadecyl ether, Triethylene glycol monooctyl ether, Triethylene glycol monotetradecyl ether, Triton^{®} CF-21, Triton^{®} CF-32, Triton^{®} DF-12, Triton^{®} DF-16, Triton^{®} GR-5M, Triton^{®} N-1 01 (Polyoxyethylene branched nonylphenyl ether), Triton^{®} QS-15, Triton^{®} QS-44, Triton^{®} RW-75 (Polyethylene glycol 260 mono(hexadecyl/octadecyl) ether and 1-Octadecanol), Triton^{®} X-100 (Polyethylene glycol tert-octylphenyl ether), Triton^{®} X-102, Triton^{®} X-15, Triton^{®} X-151, Triton^{®} X-200, Triton^{®} X-207, Triton^{®} X-114, Triton^{®} X-165, Triton^{®} X-305, Triton^{®} X-405 (polyoxyethylene(40) isooctylphenyl ether), Triton^{®} X-405 reduced (polyoxyethylene(40) isooctylcyclohexyl ether), Triton^{®} X-45 (Polyethylene glycol 4-tert-octylphenyl ether), Triton^{®} X-705-70, TWEEN^{®} in any form (including TWEEN^{®} 20 (Polyoxyethylenesorbitan monolaurate), TWEEN^{®} 21 (Polyoxyethylenesorbitan monolaurate), TWEEN^{®} 40 (polyoxyethylene(20) sorbitan monopalmitate), TWEEN^{®} 60 (Polyethylene glycol sorbitan monostearate), TWEEN^{®} 61 (Polyethylene glycol sorbitan monostearate), TWEEN^{®} 65 (Polyoxyethylenesorbitan Tristearate), TWEEN^{®} 80 (Polyoxyethylenesorbitan monooleate), TWEEN^{®} 81 (Polyoxyethylenesorbitan monooleate), and TWEEN^{®} 85 (polyoxyethylene(20) sorbitan trioleate)), Tyloxapol (4-(1,1,3,3-tetramethylbutyl)phenol polymer with formaldehyde and oxirane), and n-Undecyl β-D-glucopyranoside. Exemplary anionic detergents include Chenodeoxycholic acid, Cholic acid, Dehydrocholic acid, Deoxycholic acid, Digitonin, Digitoxigenin, N,N-Dimethyldodecylamine N-oxide, Sodium docusate, Sodium glycochenodeoxycholate, Glycocholic acid, Glycodeoxycholic acid, Glycolithocholic acid 3-sulfate disodium salt, Glycolithocholic acid ethyl ester, N-Lauroylsarcosine, Lithium dodecyl sulfate, Lugol (Iodine Potassium Iodide), Niaproof (2-Ethylhexyl sulfate sodium salt), Niaproof 4 (7-Ethyl-2-methyl-4-undecyl sulfate sodium salt), optionally substituted alkylsulfonate salts (including salts of 1-butanesulfonate, pentanesulfonate, hexanesulfonate, 1-Octanesulfonate, 1-decanesulfonate, 1-dodecanesulfonate, 1-heptanesulfonate, 1-heptanesulfonate, 1-nonanesulfonate, 1-propanesulfonate, and 2-bromoethanesulfonate, especially the sodium salts), Sodium cholate, Sodium deoxycholate, optionally substituted Sodium dodecyl sulfate, Sodium octyl sulfate, Sodium taurocholate, Sodium taurochenodeoxycholate, Sodium taurohyodeoxycholate, Taurolithocholic acid 3-sulfate disodium salt, Tauroursodeoxycholic acid sodium salt, Trizma^{®} dodecyl sulfate, Ursodeoxycholic acid. An anionic detergent can be provided in acid or salt form, or a combination of the two. Exemplary cationic detergents include Alkyltrimethylammonium bromide, Benzalkonium chloride,
Benzyldimethylhexadecylammonium chloride, Benzyldimethyltetradecylammonium chloride, Benzyldodecyldimethylammonium bromide, Benzyltrimethylamnonium tetrachloroiodate, Dimethyldioctadecylammonium bromide, Dodecylethyldimethylammonium bromide, Dodecyltrimethylammonium bromide, Ethylhexadecyldimethylammonium bromide, Girard's reagent T, Hexadecyltrimethylammonium bromide, N,N',N'-Polyoxyethylene(10)-N-tallow-1,3-diaminopropane, Thonzonium bromide, and Trimethyl(tetradecyl)aminonium bromide. Exemplary zwitterionic detergents include CHAPS (3-{(3-cholamidopropyl)-dimethylammonio}-1-propane-sulfonate), CHAPSO (3-{(3-cholamidopropyl)dimethyl-ammonio}-2-hydroxy-1-propane-sulfonate), 3-(Decyldimethylammonio)propanesulfonate, 3-(Dodecyldimethylammonio)propanesulfonate, 3-(N,N-Dimethylmyristylammonio)propanesulfonate, 3-(N,N-Dimethyloctadecylammonio)propanesulfonate, 3-(N,N-Dimethyloctylamm-onio)propanesulfonate, and 3-(N,N-Dimethylpalmitylammonio)propanesulfonate. Combinations of two or more detergents, and combinations of one or more detergents and one or more other lipid compounds also are contemplated.. Detergents can be synthesized using known procedures or can be obtained commercially from, for example, Sigma-Aldrich, St. Louis, Mo.

The term "elevated temperature" refers to a temperature above about 25°C, more typically a temperature above about 35°C, such as a temperature above about 40°C, or even above about 45°C. In particular embodiments an elevated temperature refers to a temperature from about 35°C to about 140°C, for example a temperature from about 40°C to about 120°C. In particular embodiments, an elevated temperature is a temperature from about 40°C to about 90°C.

The phrase "exposing a sample to an elevated temperature under conditions that promote evaporation of a solvent from the sample" refers to a combination of elevated temperature and gas flow (for example, forced or passive flow of air over the sample surface) that promotes removal of the solvent from the sample. Exposure of a sample to an elevated temperature under such conditions can be performed for a time sufficient (at the particular elevated temperature) to remove at least a portion of a solvent overlying a sample and/or to remove at least a portion of a solvent that has penetrated a sample during processing. Exposure of a sample to an elevated temperature under conditions that promote evaporation of a solvent from a sample can be accomplished, for example, with a radiant heater or with a convection oven. A radiant heater or convection oven used to promote evaporation of a solvent from a sample can promote passive convective gas flow over the sample surface and/or can include a means to force gas flow over the sample (such as a fan or a compressed gas source).

The term "fatty acid" refers to an aliphatic carboxylic acid having from about 6 to about 35 carbon atoms (which can be arranged in linear, branched and/or cyclic structures with or without additional heteroatoms such as oxygen or nitrogen) or a salt thereof (of which, alkali metal salts are soaps). Fatty acids include saturated and unsaturated fatty acids. Unsaturated fatty acids include monoenoic fatty acids, polyenoic fatty acids (including methylene-interrupted, polymethylene-interrupted, conjugated and allenic acids) and acetylenic fatty acids (such as tariric acid, stearolic acid, santalbic acid, ximenynic acid, 6,9-octadecenynoic acid, pyrulic acid crepenynic acid and heisteric acid). Examples of fatty acids include myristic acid, lauric acid, palmitic acid, stearic acid, behenic acid, lanolic acid, isostearic acid, undecyleic acid, hydrogenated animal fatty acids, hydrogenated vegetable fatty acids, and triple-press fatty acids. Examples of saturated fatty acids include octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, eicosanoic acid, docosanoic acid, tetracosanoic acid, hexacosanoic acid, heptacosanoic acid, octacosanoic acid, triacontanoic acid, dotriacontanoic acid, tritriacontanoic acid, teteratriacontanoic acid, and pentatriacontanoic acid. Examples of unsaturated fatty acids include obtusilic acid, linoleic, γ-linolenic acid, dihomo-γ-linolenic acid, arachidonic acid, 7, 10, 13, 16-docosatetraenoic acid, 4,7,10,13, 16-docosapentaenoic acid, α-linolenic, stearidonic acid, 8,11,14,17-eicosatetraenoic acid, EPA, DPA, DHA, Mead acid, caproleic acid, lauroleic acid, linderic acid myritoleic acid, physeteric acid, tsuzuic acid, oleic acid, palmitoleic acid, peteroselinic acid vaccenic acid, gadoleic acid, gondoic acid, cetoleic acid erucic acid nervonic acid, elaidic acid, t-vaccenic acid. Other examples of fatty acids include hydroxyl fatty acids, dicarboxylic acids, fatty acid carbonates, divinyl ether fatty acids, sulfur-containing fatty acids, fatty acid amides, methoxy fatty acids, aldehydic fatty acids, halogentated fatty acids and nitrated fatty acids. Branched-chain fatty acids include mono or multibranched chain fatty acids (such as tuberculostearic acid, phytomonoic acid, laetiporic acid, mycoceranic acid, mycoseroic acid, phthioceranic acids, phytanic acid, pristanic acid, retinoic acid), branched methoxy fatty acids (such as 2-methoxy-14-methylpentadecanoic acid and 2-methoxy-13-methyl pentadecanoic acid) and branched hydroxyl fatty acids (mycolic acids). Ring-containing fatty acids include cyclopropane acids (such as majusculoic acid), cyclopropene acids (such as sterculic acid and malvalic acid), cyclopentyl acids and cyclopentenyl acids, furanoid acids, cyclohexyl acids, epoxy acids, cyclic fatty peroxides and lipoic acid. Combinations of two or more fatty acids, and combinations of one or more fatty acids and one or more other lipid compounds also are contemplated. Fatty acids can be synthesized, isolated from natural sources or obtained commercially. Typically, a fatty acid as used herein will be present in its non-salt form since the non-salt form has a higher solubility in an organic solvent, particularly a non-polar solvent like limonene.

The term "fatty alcohol" refers to an aliphatic primary or secondary alcohol having between 6 and 35 carbon atoms (for example, between 8 and 30 carbon atoms, such as between 12 and 24 carbon atoms), which alcohol can be saturated or unsaturated, and can be branched or can contain a ring structures such as a cyclopropane ring, and can further include additional methyl, alkoxy, sulfate and/or hydroxyl group substitutions. Particular examples of saturated fatty alcohols include n-octanol, n-nonanol, n-decanol, n-undecanol, n-dodecanol, n-tridecanol, n-tetradecanol, n-pentadecanol, n-hexadecanol, n-heptadecanol, n-octadecanol, n-nonadecanol and n-eicosanol, behenyl alcohol, isooctanol, isononanol, isodecanol, isoundecanol, isododecanol, isotridecanol, isotetradecanol, isopentadecanol, isohexadecanol, isoheptadecanol, isooctadecanol, isononadecanol, isoeicosanol, isobehenyl, alcohol, 2-octanol, 2-decanol, 2-dodecanol, 2-tridecanol, 2-tetradecanol, 2-pentadecanol, 2-hexadecanol, 2-hepatadecanol, 2-octadecanol, 2-nonadecanol, and 2-eicosanol. Particular examples of unsaturated alcohols include arachidyl alcohol, erucyl alcohol, isoarachidyl alcohol, oleyl alcohol, isooleyl alcohol, linoleyl alcohol, isolinoleyl alcohol, linolenyl alcohol, isolinolenyl alcohol, obtusilyl alcohol, caproleyl alcohol, lauroleyl alcohol, linderyl alcohol, myristoleyl alcohol, physeteryl alcohol, tsuzuyl alcohol, palmitoleyl alcohol, petroselinyl alcohol, vaccenyl alcohol, gadoleyl alcohol, gondoyl alcohol, cetoleyl alcohol, erucyl alcohol, nervoyl alcohol, elaidyl alcohol, and t-vaccenyl alcohol. Particular examples of branched-chain fatty alcohols include 2-butyl-1-decanol, 2-butyl-1-octanol, 2-decyl-1-tetradecanol, 2-dodecyl-1-hexadecanol, 2-hexadecyl-1-eicosanol, 2-hexadecyl-1-octadecanol, 2-hexyl-1-octanol, 2-hexyl-1-decanol, 2-hexyl-1-dodecanol, 2-octyl-1-decanol, 2-octyl-dodecanol, 2-tetradecyl-1-eicosanol and 2-tetradecyl-1-octadecanol (available, for example, from Jarchem Industries, Inc., Newark, NJ). Examples of ring-containing fatty alcohols include alcohols that contain a cyclopropane ring, a cyclopropene ring or a cyclopentene ring. Particular examples of ring-containing fatty alcohols include majusculyl alcohol, sterculyl alcohol, malvalyl alcohol, chaulmoogryl alcohol and vemolyl alcohol. Fatty alcohols further include epoxy alcohols such as coronaryl alcohol and vernolyl alcohol. Futhermore, fatty alcohols include ethynyl alcohols such as tariryl alcohol, santalbyl alcohol, pyrulyl alcohol, crepenynyl alcohol, heisteryl alcohol, and orpheyl alcohol. Fatty alcohols include mono-methylated alcohols (phthiocerols), polyisoprenoid alcohols, (such as isopranols like pristanol and phytanol), polyprenols (such as geraninol, farnesol, geranylgeraniol, geranylfamesol, solanesol, castaprenols, ficaprenols, dolichols and phytol), and aromatic polyisoprenoid alcohols (such as tocopherols, steroids, triterpenoids, flavanoids, carotenoids and delatanoids). Combinations of two or more fatty alcohols, and combinations of one or more fatty alcohols and one or more other lipid compounds also are contemplated.. Fatty alcohols can be prepared from corresponding fatty acids by reduction, isolated from a natural source or can be purchased commercially.

The term "fatty amine" refers to an aliphatic amine having between 6 and 35 carbon atoms or a salt thereof. Fatty amines include primary, secondary, tertiary, and ethoxylated or propoxylated amines. Examples include oleylamine, 1-dodecylamine, din-octadecylamine, tri(isodecyl)amine, dimethyl-n-decylamine, bis(2-hydroxyethyl)dodecylamine, bis(2-hydroxypropyl)dodecylamine, bis(2-hydroxyethyl)tallowamine. Additional examples include n-octylamine, n-decylamine, n-tetradecylamine, n-hexadecylamine, n-octadecylamine. Other examples of fatty amines include commercially available fatty amines such as Armeen® amines (available from Akzo Chemicals, Chicago, III.) such as Akzo's Armeen C, Armeen O, Armeen OL, Armeen T, Armeen HT, Armeen S and Armeen SD, wherein the letter designation relates to the fatty group, such as coco, oleyl, tallow, or stearyl groups. Fatty amines can be prepared from corresponding fatty acids or fatty alcohols according to methods well known in the art of organic synthesis. Thus, amines derived from other specifically recited fatty alcohols and fatty acids are contemplated. Combinations of two or more fatty amines, and combinations of one or more fatty amines and one or more other lipid compounds also are contemplated.. Typically, a fatty amine as used herein will be present in its non-salt form since the non-salt form has a higher solubility in an organic solvent, particularly a non-polar solvent like limonene.

The term "fatty ester" refers to an ester of an alcohol (fatty or otherwise) and a carboxylic acid (fatty or otherwise) having a total of from about 6 to about 100 carbon atoms, for example, from about 8 to about 50 carbon atoms, such as from about 10 to about 35 carbon atoms. The alcohol portion can be a primary or secondary alcohol, or a polyol such as glycerol or a sugar. The fatty acid portion can be a monocarboxylic acid or a polycarboxylic acid such as a dicarboxylic acid like adipic acid. Both the alcohol and the carboxylic acid can be saturated or unsaturated, linear or branched, and can be substituted or unsubstituted with additional groups such hydroxyl groups and alkoxy groups (for example methoxy or ethoxy groups). Any of the particular fatty alcohols disclosed herein can be combined with a carboxylic acid such as acetic acid, propionic acid, n-butanoic acid, isobutanoic acid, n-pentanoic acid, isopentanoic acid or neopentanoic acid to provide a fatty ester. Likewise, any of the particular fatty acids disclosed herein can be combined with an alcohol such as methanol, ethanol, *n*-propanol, isopropanol, *n*-butanol, isobutanol, *n*-pentanol, isopentanol or neopentanol to provide a fatty ester. Methods for preparing such esters are well known in the art. In particular embodiments, a fatty ester is an ester of a straight chain aliphatic primary-alcohol and a straight chain fatty acid having the formula RCOOR', wherein R and R' are aliphatic groups such as alkyl or alkenyl groups, and R and R' independently have 1-50 carbon atoms, for example, 1-30 carbon atoms such as 1-20 carbon atoms. Particular examples of fatty esters include ascorbyl palmitate, cetyl lactate, caprylic/capric triglyceride, propylene glycol dicaprylate/dicaprate, myristyl lactate, myristyl myristate, pentaerythrityl tetraoleate, pentaerythrityl tetrastearate, isopropyl myristate, isopropyl palmitate, a cetyl ester, stearyl stearate, butyl stearate, myreth-3 myristate, pentaerythrityl tetrabehenate, diisopropyl adipate, dipentaerythrityl hexacaprylate/hexacaprate, neopentyl glycol dicaprylate/dicaprate, dridecyl stearate, tridecyl trimellitate, PEG-4 diheptanoate, pentaerythrityl tetracaprylate/tetracaprate, isocetyl stearate, ethylhexyl palmitate, C12-15 alkyl benzoate, cetyl ricinoleate, glycol stearate, glycol distearate, proplylene glycol stearate, glyceryl stearate, glyceryl cocoate, trigehenin, trilaurin, stearyl acetate, palmityl di-lactate, cocoyl isobutyrate, oleyl maleate, oleyl dimaleate, tallowyl proprionate, 2-ethyl hexyl palmitate, 2-ethylhexyl stearate, cetyl octanoate, hexyl laurate, isobutyl tallowate, isostearyl palmitate, n-butyl oleate, n-butyl stearate, n-propyl oleate, tridecyl stearate, isobutyl myristate, isopropyl palmitate, isopropyl stearate, isopropyl isostearate, isobutyl stearate, linalyl acetate. Additional fatty esters include xylitol monopalmitate, pentaerythritol monostearate, sucrose monostearate, glycerol monostearate, ethylene glycol monostearate, sorbitan esters. Suitable sorbitan esters include sorbitan monostearate, sorbitan palmitate, sorbitan monolaurate, sorbitan monomyristate, sorbitan monobehenate, sorbitan mono-oleate, sorbitan dilaurate, sorbitan distearate, sorbitan dibehenate, sorbitan dioleate, and also mixed tallowalkyl sorbitan mono- and di-esters. Combinations of two or more fatty esters, and combinations of one or more fatty esters and one or more other lipid compounds also are contemplated. Fatty esters can be synthesized, isolated from natural sources or obtained commercially. Emollient esters such as Liponate® esters can be obtained from Lipo Chemicals, Patterson, NJ.

The phrase "increased contrast and cellular and sub-cellular definition compared to a substantially similar sample" refers to the situation where two substantially similar biological samples that have been treated in substantially the same manner are compared microscopically. However, one of the samples has been contacted with a lipid compound according to the disclosure and the other has not, and the sample contacted with the lipid compound exhibits greater visual definition of cellular and sub-cellular features. In some embodiments, not only will there be increased visual definition of cellular and sub-cellular features in the sample, but overall the sample treated with a lipid compound can demonstrate more contrast and be more easily viewed by an observer. In other embodiments, the increase in definition and increased contrast specifically refers to an overall increase across the sample as opposed to an increase in a discrete, localized signal (such as discrete fluorescence signal). In a particular embodiment, a sample stained with a histological stain and treated with a lipid compound will exhibit increased cellular and sub-cellular definition and contrast when viewed in a brightfield microscope. In one aspect, the increased definition can assist a pathologist in making a diagnosis. In another aspect, the increased definition includes an overall increase in the degree of contrast and cellular clarity in an H&E stained sample treated with a lipid compound when compared with an H&E stained sample not treated with the lipid compound.

The term "histochemical" refers to any technique used to provide a signal or pattern that can be used to detect particular molecules or structures and/or their location in a biological sample such as a tissue section or a cell sample. Histochemical techniques include immunohistochemical techniques, cytochemical techniques, histological techniques, enzyme histochemical techniques, special staining techniques, and *in situ* hybridization techniques. Patterns and signals provided by a histochemical technique include without limitation a pattern of complementary colors produced when white light is passed through a sample and some is absorbed, a fluorescence signal that is detected after excitation of a fluorophore in a sample, patterns of colored substances deposited by an enzymatic reaction and scintillation signals produced by radioactively labeled probes such as antibody and nucleic acid probes.

As used herein, the term "histological stain" ("histological staining") refers to a dye or substance (or application of the dye or substance) that preferentially binds to a certain type of cell and/or cell component. The preferential binding of a histological stain to a cell or cell component does not involve a specific molecular recognition event such as in an antibody-antigen binding interaction (for example, in immunohistochemical staining) or in hybridization of complementary nucleic acids (for example, in *in situ* hybridization). A histological stain can lend color to a sample by absorbing particular wavelengths of broadband light (such as a spectrum of visible white light) as they pass through a sample (or reflect from a sample), thereby leaving the complementary color to be detected (for example, visually in a brightfield light microscope). Histological stains include dyes such as acridine dyes, anthraquinone dyes, arylmethane dyes, azo dyes, diazonium dyes, nitro dyes, phthalocyanine dyes, quinine imine dyes, tetrazolium dyes, thiazole dyes and xanthene dyes. Histological stains include hematoxylin and eosin, which together are a general purpose histological stain, and "special stains" that are used in particular diagnostic settings. Examples of dyes useful for histological staining include acetyl yellow, acid black 1, acid blue 22, acid blue 93, acid fuchsin, acid green, acid green 1, acid green 5, acid magenta, acid orange 10, acid red 4, acid red 26, acid red 29, acid red 44, acid red 51, acid red 66, acid red 73, acid red 87, acid red 91, acid red 92, acid red 94, acid red 101, acid red 103, acid roseine, acid rubin, acid violet 19, acid yellow 1, acid yellow 9, acid yellow 23, acid yellow 24, acid yellow 36, acid yellow 73, acid yellow S, acid yellow T, acridine orange, acriflavine, alcian blue, alcian yellow, alcohol soluble eosin, alizarin, alizarin blue, alizarin blue 2RC, alizarin carmine, alizarin cyanin BBS, alizarol cyanin R, alizarin red S, alizarin purpurin, aluminon, amido black 10B, amidonaphthol red, amidoschwarz, aniline blue WS, aniline purple, anthracene blue SWR, anthracene blue SWX, auramine O, azo-eosin, azocarmine B, azocarmine G, azoeosin G, azoic diazo 5, azoic diazo 48, azophloxine, azovan blue, azure A, azure B, azure C, basic blue 8, basic blue 9, basic blue 12, basic blue 15, basic blue 17, basic blue 20, basic blue 26, basic brown 1, basic fuschsin, basic green 4, basic green 5, basic orange 14, basic red 2, basic red 5, basic red 9, basic violet 2, basic violet 4, basic violet 10, basic violet 14, basic yellow 1, basic yellow 2, Biebrich scarlet, Biebrich scarlet R, Bismarck brown Y, brazilein, brazilin, brilliant crocein, brilliant crystal scarlet 6R, calcium red, carmine, carminic acid carmoisine 6R, Celestine blue B, china blue, chlorantine fast red 5B, cochineal, coelestine blue, Chicago blue 4B, chrome violet CG, chromotrope 2R, chromoxane cyanin R, congo Corinth, Congo red, cotton blue cotton red, croceine scarlet crocein scarlet 3B, crocein scarlet MOO, crocin, crystal ponceau 6R, crystal scarlet, crystal violet, dahlia, diamond green B, direct blue 14, direct blue 58, direct red, direct red 10, direct red 28, direct red 80, direct red 81, direct yellow 7, durazol blue 4R, durazol blue 8G, eosin B, eosin bluish, eosin, eosin Y, eosin yellowish, eosinol, Erie garnet B, eriochrome cyanin R, erythrosine B ethyl eosin, ethyl green, ethyl violet, Evan's blue, fast blue B, fast green FCF, fast red B, fast yellow, fast yellow extra, fast yellow G, fat black HB, fluorescein, food green 3, galleon, gallamine blue gallocyanin, gentian violet, haematein, haematine, haematoxylin, helio fast rubin BBL, helvetia blue, Hoffman's violet, hydrazine yellow, imperial red, ingrain blue 1, ingrain yellow 1, INT, Kermes, kermesic acid, kernechtrot, Lac, laccaic acid, Lauth's violet, light green, lissamine fast yellow, lissamine green SF, Luxol fast blue, magenta 0, magenta I, magenta II, magenta III, malachite green, Manchester brown, Martius yellow, mauve, mauveine, merbromin, mercurochrome, metanil yellow, methylene azure A, methylene azure B, methylene azure C, methylene blue, methylene green, methyl blue, methyl green, methyl violet, methyl biolet 2B, methyl violet 10B, milling yellow 3G, mordant blue 3, mordant blue 10, mordant blue 14, mordant blue 23, mordant blue 32, mordant blue 45, mordant red 3, mordant red 11, mordant violet 25, mordant violet 39, naphthalene blue black, naphthol blue black, naphthol green B, naphthol yellow S, natural black 1, natural red, natural red 3, natural red 4, natural red 8, natural red 16, natural red 24, natural red 25, natural red 28, natural yellow 6, NBT, neutral red, new fuchsin, Niagara blue 3B, night blue, Nile blue, Nile blue A, Nile blue sulfate, Nile red, nitro BT, nitro blue tetrazolium, nuclear fast red, oil red O, orange G, orcein, pararosanilin, Perkin's violet, phloxine B, picric acid, Ponceau 2R, Ponceau 6R, Ponceau B, Ponceau de Xylidine, Ponceau S, pontamine sky blue 5B, primula, primuline, purpurin, pyronin B, pyronin G, pyronin Y, rhodamine B, rosanilin, rose Bengal, saffron, safranin O, scarlet R scarlet red, Scharlach R, shellac, sirius red F3B, sirius red 4B, sirius supra blue F3R, solochrome cyanin R, soluble blue, solvent black 3, solvent blue 38, solvent red 23, solvent red 24, solvent red 27, solvent red 45, solvent yellow 94, spirit soluble eosin, Sudan III, Sudan IV, Sudan black B, Sudan red BK, sulfur yellow S, Swiss blue, tartrazine, thioflavine S, thioflavine T, thionin, toluidine blue, toluyline red, tropaeolin G, trypaflavine, trypan blue, uranin, Vicoria blue 4R, Victoria blue B, Victoria blue R, Victoria green B, water blue I, water soluble eosin, woodstain scarlet, Xylidine ponceau, and yellowish eosin, and combinations thereof. Particular examples of alum mordanted hematoxylin histological stains include Anderson's, Apathy's, Baker's Bennett's, Bohmer's, Bosma's, Bullard's, Carazzi's, Cole's, Debiden's, de Groot's, Delafield's, Duval's, Ehrlich's, Friedlander's, Gadsdon's, Gage's, Galigher's, Garvey's, Gill's, Graham's, Hamilton's, Harris', Harris & Power's, Haug's, Homeyold's, Kleinenberg's, Krutsay's, Langeron's, Launoy's, Lee's, Lillie's, Lugol's, McLachlan's, Mallory's, Mann's, Martinotti's, Masson's, Mayer's, Mitchell's, Molnar's, Papamiltiades', Pusey's, Rawitz', Reddy's, Sass', Schmorl's, Slidders', Unna's, Watson's, and Weigert & Wright's. Particular examples of iron-mordanted hematoxylin stains include Anderson's, Cretin's, Faure's, Goldman's, Hansen's, Heidenhain's, Janssen's, Kefalas', Krajian's, Krutsay's, La Manna's, Lillie's, Lillie & Earle's, Masson's, More & Bassal's, Murray's, Paquin & Goddard's, Regaud's, Rozas', Seidelin's, Thomas', Weigert's, and Yasvoyn's. A bismuth-mordanted hematoxylin is Roach & Smith's. Copper-mordanted hematoxylins include Bensley's, Cook's and Faure's. A molybdenum-mordanted hematoxylin is Held's. Vanadium-mordanted hematoxylins include Hedenhain's, and Smith's. A zirconium-mordanted hematoxylin is McNulty & Smith's. Examples of histological staining techniques that utilize one or more particular dyes include without limitation: Scott's CEC; Hale's colloidal iron; Mowry's colloidal iron; Ritter & Oleson's colloidal iron; Smith & McNulty's Zirconyl hematoxylin; MacFarland and Davenport's silver proteinate; Akita & Kaneko's hamalum; Lendrum, Slidders & Fraser Alcian blue; Gabe's aldehyde fuchsin; Gomori aldehyde fuchsin; Lewelyn's aldehyde toluidine blue; McGhee Russel Alizarin red S for calcium; Shokeir & Elbagoury's Alloxan Schiff; Benhold's Congo red; Bums, Pennock & Stoward's Thioflavine T; Eastwood and Coles's Congo red; Highman's Congo red; Llewellyn's Sirius red; Puchtler, Sweat and Levine's Congo red, Stokes' Congo red; Sweat and Puchtler's Sirius red; Vassar and Culling's thioflavine T; Roach & Smith's Bismuth hematoxylin; Arkush & Proescher's iron alum-celestine blue; Nottingham technique; Hurukian-Schenk's Gram stain, Baker's alum hematoxylin, Smith's vanadium hematoxylin; Baure reaction; Bennett's alum hematoxylin; Bennhold's Congo Red; Bensley; Boone & Drijver's trichome; Bensley's PTAB; Brillmeyer's trichrome; Bums, Pennock & Stoward's thioflavine T; CAB; Von Kossa; Carrazzi's; Lillie' Ion PAS; Lillie's short PAS; standard PAS; periodic acide thiosemicarbazide; Cason's trichrome; Chiffelle & Putt; Einarson; Herovici; Picro-fuchsin; Puchtler's; van Gieson's; Hohashi's trichrome; Mollier's trichrome; Paquin & Goddard's trichrome; Pasini's trichrome; Walter's trichrome; Garvey; Garvey-Movat pentachrome; Roques' trichrome; Silverman-Movat pentachrome; Hollande's trichrome; Bensley's trichrome; Cason's trichrome; Gomori's trichrome; Hedenhain's Azan trichrome; Kricheski's trichrome; Ladewig's trichrome; Lee-Brown's trichrome, Lillie's trichrome; Mallory's trichrome; Masson's trichrome and variants; Milligan's trichrome; Mollendor's trichrome; Patay's trichrome; Shoobridge's polychrome; Crossman's trichrome; Howell's rubeanic acid; Culling & Vassar's thioflavine T; Cunningham & Engel's; Papanicolou's alcoholic trichrome; Papanicoloaou's trichrome; Daws trichrome; Feulgen's; Dupres magenta; Enarson's gallocyanin chrome; Hart's iron resorcin fuchsin; Humberstone's iron resorcin; Taenzer-Unna orcein; Unna's orcein-aniline blue; Weighert's iron resorcin fuchsin; Kohashi's trichrome; Paquin & Goddard's trichrome; Walters trichrome; Dawe's trichrome; Meter's eosin; Chiffelle & Putt; Perls Prussian blue; Dirmann Schmelzer Tumull's blue blue; MSB; Masson 44/41; Obadiah; Picro-Mallory; Gridley; Lewellyn's double oxidation thiosemicarbazide Schmorl; Vanderbilt; Haythorne's trichrome; Heidenhain's Azan trichrome; Leung & Gibbon's Alcian yellow toluidine blue; Sayeed's PAS-toluidine blue; toluidine blue; Koneff's trichrome; Kostowiecki's trichrome; Lee-Brown's trichrome; Lendrum's phloxine tartrazine; Roques' trichrome; Mayer's mucicarmine; Mayer's mucihematein; Llewellyn's mordant blue 3; Nottingham technique; Nuclear fast red counterstain; Slidders OFG; Chiffelle & Putt Oil red O in propylene glycol; Palmgren's silver impregnation; Patay's trichrome; Lewis & Miller's trichrome; van Gieson; and techniques utilizing the particular hematoxylin's listed above. Staining protocols, dyes and stains used to stain particular cells and cell components are well known to those skilled in the art, and additional examples can be found in the Stainsfile (an internet resource for histotechnologists maintained by Bryan Llewellyn); Kiernan, "Histological and Histochemical methods: Theory and Practice," 3rd Ed. Butterworth Heinemann, Oxford, UK; and in Horobin and Kieman, "Conn's biological stains: a handbook of dyes, stains and fluorochromes for us in biology and medicine," 10th ed., Oxford: BIOS, ISBN 1859960995, 2002, which is incorporated by reference herein. Staining can be done progressively or regressively. Mordanted stains can be applied onchrome, metachrome or afterchrome.

As used herein, the term "lipid compound" refers broadly to a compound that has a significant solubility (such as a solubility at 20°C of greater than about 0.1 g/L, greater than about 0.5g/L at 20°C or greater than about 1.0 g/L at 20°C) in an organic solvent (such as diethyl ether, acetone, chloroform, limonene, methanol or ethanol). More particularly, a lipid compound can be more soluble in an organic solvent such as limonene than it is in water. In some embodiments, a lipid compound has a water solubility of less than about 5.0 g/L at 20°C (such as less than about 1.0 g/L at 20°C, less than about 0.5g/L at 20°C, or even less than about 0.1g/L at 20°C). In particular embodiments, a lipid compound is substantially insoluble in water. A Lipid compound can be a detergent lipid compound or a non-detergent lipid compounds. Lipid compounds include fatty alcohols, fatty amines (and salts thereof), fatty acids (and salts thereof), fatty acid esters, isoprenoids (including terpenes and terpenols, such as triterpenes and terpenols and higher molecular weight terpenes and terpenols), membrane lipids, glycolipids (such as glycerophospholipids such as phosphatidylcholine), phospholipids (such as sphingolipids like sphingomyelin), sterols (such as cholesterol), paraffins (such as C8-C20 alkanes and alkenes), and detergents (anionic, cationic, zwitterionic, or non-ionic). Additional lipid compounds include acylglycerols [such as monacylglycerols, diacylglycerols, triacylglycerols, fats and oils, polyglycerol esters, and mixtures thereof), plasmalogen analogs of acylglycerols or phospholipids, amino compound-containing lipids (such as fatty acids combined with an amino acid, carnitine, dopamine, or an amino alcohol such as ethanolamine), amino alcohols, carotenoids, ceramides, cyanolipids, phenolic lipids, protanoids and related compounds, quinines, steroids (for example, sterols such as cholesterol, brassinosteroids, bufadienolides, cardenolides, cucurbitacins, ecdysteroids, sapogenins, steroid alkaloids, withasteroids, and bile acids), hopenoids, mycolic acids, eicosanoids, cholanoids, ether-containing lipids, vitamin alcohols (such as vitamins A, D and E), vitamin K, lecithin, hydrocarbons (such as C6 to C30 alkanes and alkenes), and waxes. Examples of particular lipid compounds can be found, for example, on the Cyberlipid website and the Lipid Bank for the Web. Lipid compounds can be synthesized, isolated from natural sources or obtained commercially, for example, from Sigma-Aldrich Co., St. Louis MO. The term "lipid compound" also refers to combinations of two or more lipid compounds.

The term "lower alkanol" refers to a compound having the structure R-OH, wherein R is an alkyl group having from 1 to 5 carbons. A lower alkanol can be a primary, secondary or tertiary alcohol. Examples of lower alkanols include methanol, ethanol, n-propanol, isopropanol, n-butanol, sec-butanol, t-butanol, n-pentanol, isopentanol and neo-pentanol.

The term "polyether" refers to a compound containing multiple ether linkages, and more particularly to a polyalkylene oxide compound (such as a polyethylene glycol compound, a polypropylene glycol compound, or a polybutylene glycol compound, or a co-polymer therof) that can be unftmctionalized (such as a polyether glycol), mono-functionalized (for example, with an alkyl group such as methyl, ethyl, propyl, butyl or the like to form a polyether) or polyfunctionalized (for example, with an alkyl group and a fatty acid such as oleate to form a polyether ester). Thus, in some embodiments a polyether has the formula R₁-(x)_{y}-R₂, wherein R₁ and R₂ are independently hydrogen, an alkyl group or a fatty acid, X refers to the repeated polyalkylene monomer unit (such as a ethylene glycol unit, a propylene glycol unit, a polybutylene glycol unit, or a combination thereof), and y = 2-50 (for example, y = 2 -30 such as y = 3-20).

The term "polysiloxane" refers to any of various compounds containing alternate silicon and oxygen atoms in a linear, branched or cyclic arrangement with one or more organic groups attached to each silicon atom. Examples of polysiloxane compounds include nonfunctional and organofunctional polysiloxanes including dimethylpolysiloxanes, methylhydrogen polysiloxanes, methylalkyl polysiloxanes methylaryl polysiloxanes, methylfluoroalkyl polysiloxanes, and organofunctional methylpolysiloxanes such as aminoalkylmethyl polysiloxanes, cyanoalkylmethyl polysiloxanes, haloalkylmethyl polysiloxanes, and vinylmethyl polysiloxanes. Examples of cyclic polysiloxanes include hexamethylcyclotrisiloxane (D₃), octamethylcyclotetrasiloxane (D₄), decamethylcyclopentasiloxane (D₅), and dodecamethylcyclohexasiloxane (D₆). Additional particular examples of polysiloxanes include hexamethyldisiloxane (L₂), octamethyltrisiloxane (L₃), decamethyltetrasiloxane (L₄) and dodecamethylpentasiloxane (L₅). 1,3,5-trimethyl-1,3,5-tri(3,3,3-trifluoropropyl) cyclotrisiloxane and 1,3,5,7-tetramethyl-1,3,5,7-tetra(3,3,3-trifluoropropyl) cyclotetrasiloxane. Additional examples include silicone oil (such as dimethylpolysiloxane, methylhydrogenpolysiloxane and methylphenylsilicone oil) fluorine-modified silicone oil, amino-modified silicone oil, epoxy-modified silicone oil, alcohol-modified silicone oil, and organic substance-modified silicone oil, such as alkyl-modified silicone oil. The polysiloxane can be a single polysiloxane or a mixture of two or more polysiloxanes and each polysiloxane can have any arrangement of siloxane units, such as linear, cyclic, branched, or combinations thereof. Polysiloxanes are commercially available, for example, from Sigma-Aldrich, St. Louis, MO. Combinations of two or more polysiloxanes, and combinations of one or more polysiloxanes and one or more other lipid compounds also are contemplated.

The term "wax" refers to water-insoluble materials made up of various substances including, for example, hydrocarbons (normal or branched alkanes and alkenes), ketones, diketones, primary and secondary alcohols, aldehydes, sterol esters, alkanoic acids, terpenes (such as squalene) and moonesters (wax esters) and the individual components derived therefrom. More particularly, waxes can be esters of an alcohol other than glycerol (such as a fatty alcohol, a sterol, a hydroxycarotenoid or vitamin A) and a fatty acid. Examples of waxes include cutin, suberin, epicuticular wax, phthiocerol waxes (such as dimycocerosate esters), bee wax, Chinese wax, Shellac wax, Whale spermaceti, Lanolin, Carnauba wax, Ouricouri wax, Jojoba oil, Candelillia wax, Esparto wax, Japan wax, Rice bran oil, Ozocerite, Montan wax, and synthetic waxes (and wax components such as fatty esters and mixtures thereof). Combinations of two or more waxes, and combinations of one or more waxes and one or more other lipid compounds also are contemplated.

All percentages given refer to weight/volume percentages when a substance that is a solid at room temperature is dissolved in a liquid and volume/volume percentages when a substance that is a liquid at room temperature is dissolved in another liquid. Components can be mixed prior to applying them to a sample, or they can be applied separately to the sample and then mixed, either passively or actively.

### IV. Examples

Having described some of the more general features of the disclosure, further features and aspects are illustrated in the following non-limiting examples.

### Example 1-Inclusion of a Lipid Compound during a Coverslipping Step

In this example, the use of a lipid compound in an automated H&E process is shown. Paraffin-embedded liver tissue samples mounted on microscope slides were stained using an automated H&E staining process that incorporated a lipid compound dissolved in a coverslipping solvent. Several lipid compounds representing different chemical classes were added to the coverslipping solvent that is used to coverslip the tissue samples. Once the coverslips were added to the slides and the coverslips were cured into place, a pathologist examined the slides and scored the level of definition observed in the samples. The pathologist also examined and scored the slides for the presence of artifacts produced by drying the sample at an elevated temperature. This example demonstrates that the morphology of a tissue sample that is exposed to an elevated temperature under conditions that promote evaporation of solvents can be restored and visually enhanced, and that artifacts induced by the elevated temperature and evaporating conditions can be prevented or removed by contacting the sample with a lipid compound during a coverslipping step.

Although the method and composition of the disclosure can be applied to any histological staining process (manual or automated) or any slide staining instrument, in this example, the method and composition are incorporated into an automated H&E staining process developed for use in the high volume slide processing system that is described in U.S. Patent Application Publication Nos. 20040002163 and 20050186114 (both of which applications are incorporated by reference herein). Briefly, the automated slide processing system that is described in the aforementioned applications is a high-volume slide processing system that shuttles trays holding a plurality of slides in substantially horizontal positions (to minimize cross-contamination) between workstations that perform various slide processing operations on the slides. Fresh reagents can be applied to each slide during processing, and cross contamination of slides with reagent can be substantially eliminated because the slides are treated separately in spaced apart fashion in the tray. In one configuration, the system includes a radiant heater, a combined de-paraffinizer/stainer/solvent exchanger workstation, a convection oven and a coverslipper. A tray of slides bearing paraffin-embedded tissue samples can be heated under the radiant heater of the system to spread the paraffin in the samples for easier removal and also to adhere samples to the slides. The tray can then be transported to the multifunctional de-paraffinizer/stainer/solvent exchanger workstation, where slides can be de-paraffinized, stained, and solvent exchanged. A tray of stained slides that is ready for coverslipping can then be shuttled to the coverslipper of the system where coverslips are added to the slides. Once the slides are coverslipped, the tray can then be transported to the convection oven to cure the coverslips on the stained slides.

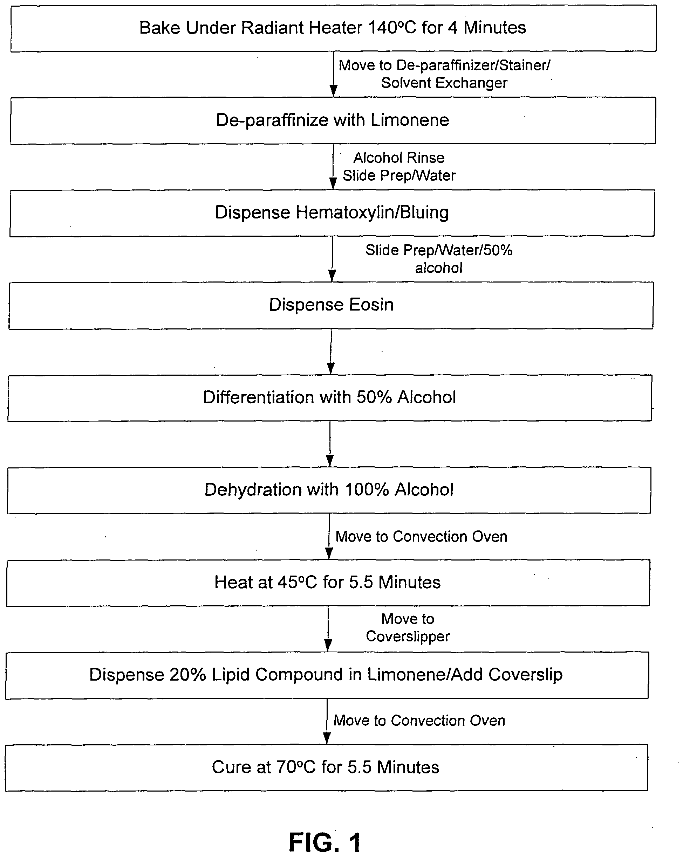

Although the staining system just described can be configured to perform any histological staining process, in this example, the system was configured to perform a regressive H&E stain. A schematic showing the overall process is shown in FIG. 1, which process includes: a baking step to adhere the samples to the slides, a de-paraffinization step to remove paraffin from paraffin-embedded samples, a hematoxylin staining step, a bluing step that raises the pH and turns the hematoxylin blue to provide better contrast with the eosin added downstream, an eosin staining step, a differentiation step that is used to remove excess eosin andd turn the eosin redder, a dehydration step to remove water from the sample using 100% ethanol, a step in which the slides are exposed to an elevated temperature and air flow to remove the ethanol, a coverslipping step in which limonene (to which a lipid compound is added in some instance) is dispensed to the sample, and a curing step.

In the H&E process utilized for this example, the convection oven also was used to eliminate or reduce the extent of the solvent exchange process just prior to coverslipping. The tray was transported to the convection oven for a few minutes to evaporate excess alcohol from the samples, and then the tray was transported to the coverslipper where the coverslipping solvent (with or without a lipid compound dissolved therein) was added to the slides and the slides are coverslipped.

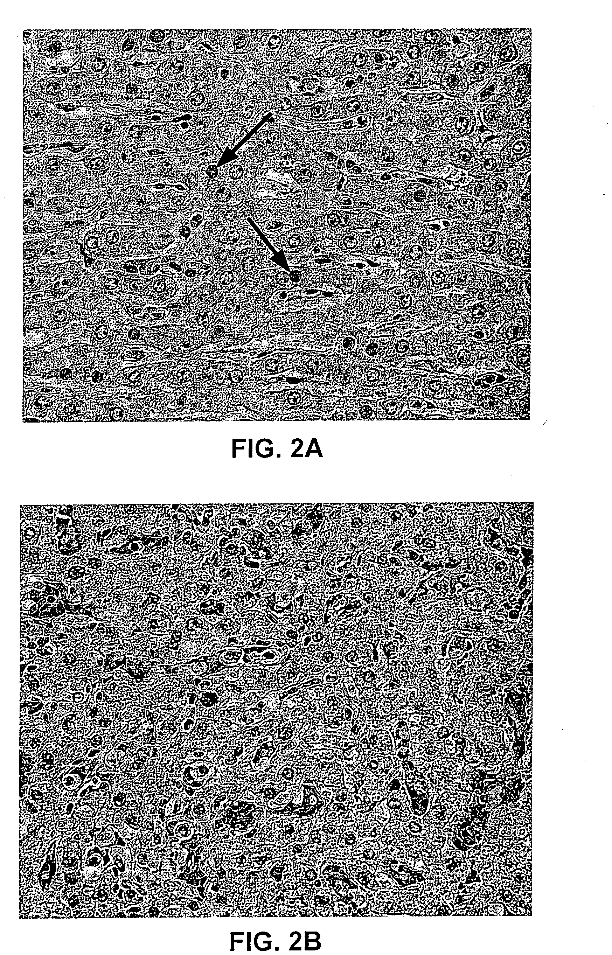

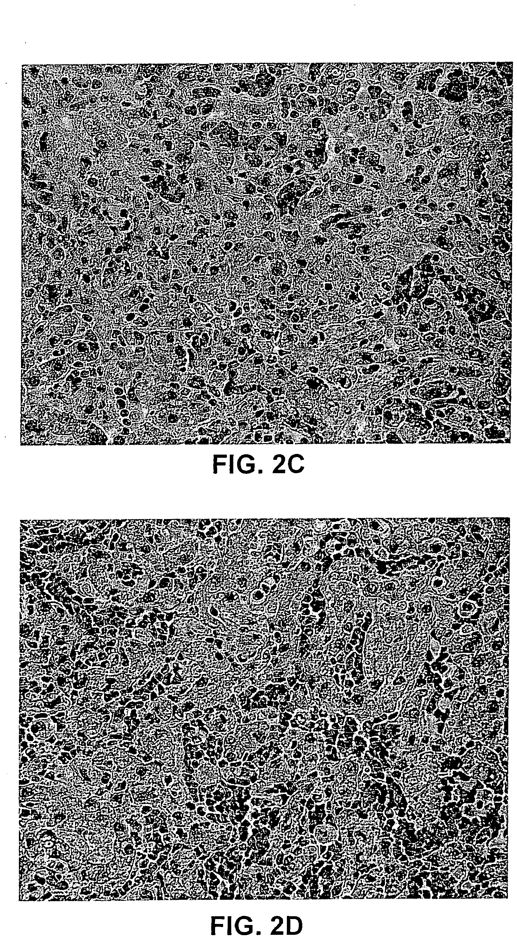

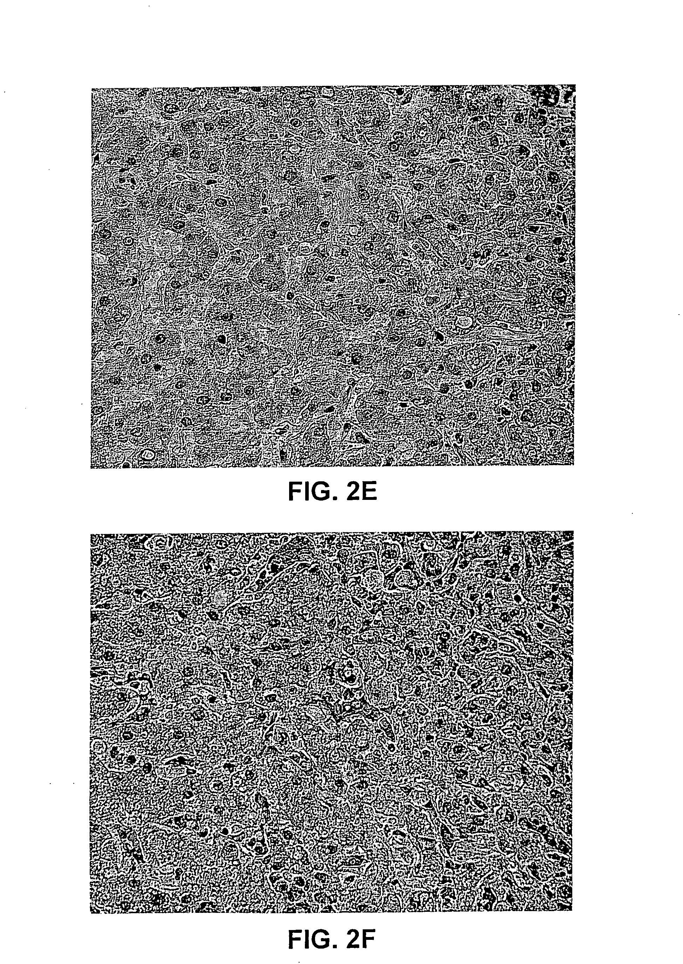

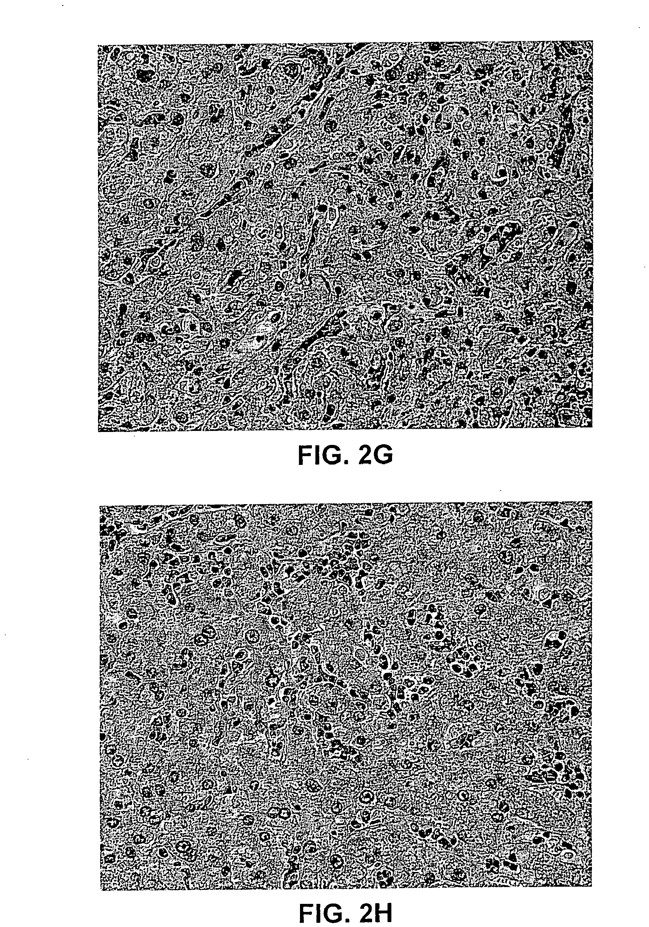

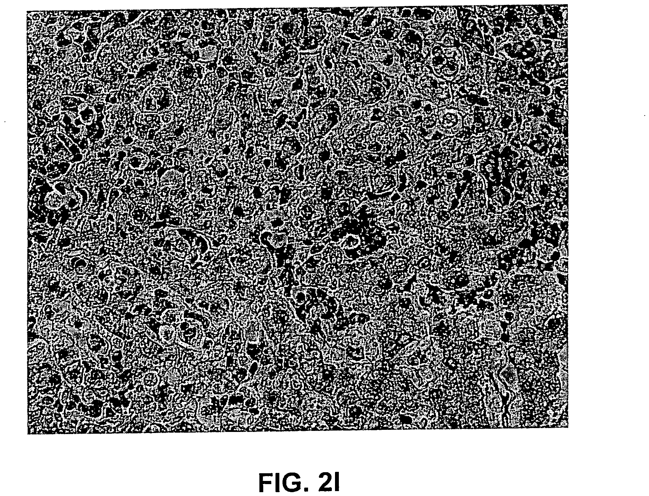

As shown in FIG. 1, each lipid compound was dissolved at a concentration of 20% in limonene, and the limonene mixture was used (about 30 µL/slide) for coverslipping. Each of several lipid compounds representing various chemical classes were used in the automated process at the 20% concentration. Brightfield photomicrographs of the H&E stained slides were obtained using each of the different lipid compounds and are shown in FIGS. 2B-I, along with a control slide (FIG. 2A) that was prepared without a lipid compound dissolved in the limonene. Specifically, FIG 2A shows the control slide, FIG 2B shows a tissue sample that was prepared using 20% decamethylcyclopentasiloxane (a polysiloxane) in limonene, FIG. 2C shows a tissue sample that was prepared using 20% dioctylether (a fatty ether) in limonene, FIG. 2D shows a tissue sample that was prepared using 20% cedarwood oil [a mixture of terpenes; specifically, a mixture of cedrol (a terpenol) and cederene (a terpene), and derivatives thereof such as esters thereof] in limonene, FIG. 2E shows a tissue sample that was prepared using 20% octanoic acid (a fatty acid) in limonene, FIG. 2F shows a tissue sample that was prepared using 20% linalyl acetate (a fatty ester) in limonene, FIG. 2G shows a tissue sample that was prepared using 20% Triton X-100 (a detergent) in limonene, FIG. 2H shows a tissue sample that was prepared using 20% squalene (an isoprenoid) in limonene and FIG. 2I shows a tissue sample that was prepared using 20% 1-undecanol (a fatty alcohol) in limonene.

A comparison of each of the images in FIG. 2 shows that in comparison to the control slide shown in FIG 2A, each of the lipid compounds increased contrast, color balance and definition of cellular and subcellular features and reduced the number of nuclear drying artifacts (two such artifacts are indicated by arrows in FIG. 2A) induced by processing at elevated temperatures under conditions that promoted evaporation of ethanol from the samples. A panel of 3 pathologists agreed that greater definition was present in all of the samples treated with a lipid compound when compared to a sample not treated with a lipid compound.

A pathologist also determined the number of nuclear drying artifacts on each of several slides treated with a given lipid compound, and the average was computed. The results for the number of nuclear drying artifacts are shown in Table 1 below. For comparison, the number of artifacts observed in a liver tissue sample that was prepared using an automated process involving evaporation of ethanol at an elevated temperature without contacting the samples with a lipid compound was too numerous to count. Generally, a sample with 500 or more such nuclear drying artifacts across a tissue section, has artifacts that are too numerous to count.

**Table 1**

| **Compound in Coverslipping Solvent** | **Average Number of Drying Artifacts per Slide** |
|---|---|
| None/Positive Control | Too Numerous to Count (TNC) |
| Decamethylcyclopentasiloxane | 5 |
| Dioctyl ether | 1 |
| Cedarwood Oil | 2 |
| Octanoic acid | 2* |
| Linalyl acetate | 0 |
| Triton X-100 | 5 |
| Squalene | 2 |
| 1-undecanol | 1 |

| | |
|---|---|
| * One slide that exhibits nuclear drying artifacts TNC is excluded since it also shows major air bubbles under the coverslip, indicating that the coverslipping solvent is not distributed evenly across the tissue sample. | |

### Example 2 - Lipid Compound Added to Alcohol and/or Limonene in an H&E Staining Protocol

In this example, oleyl alcohol (an unsaturated fatty alcohol) was dissolved at a variety of concentrations in either or both of 100% ethanol and limonene, and these reagents were applied to a tissue sample prior to drying or during a coverslipping step of an automated H&E staining process, respectively. As in Example 1, liver tissue sections were used and stained using the automated slide processing system described above.

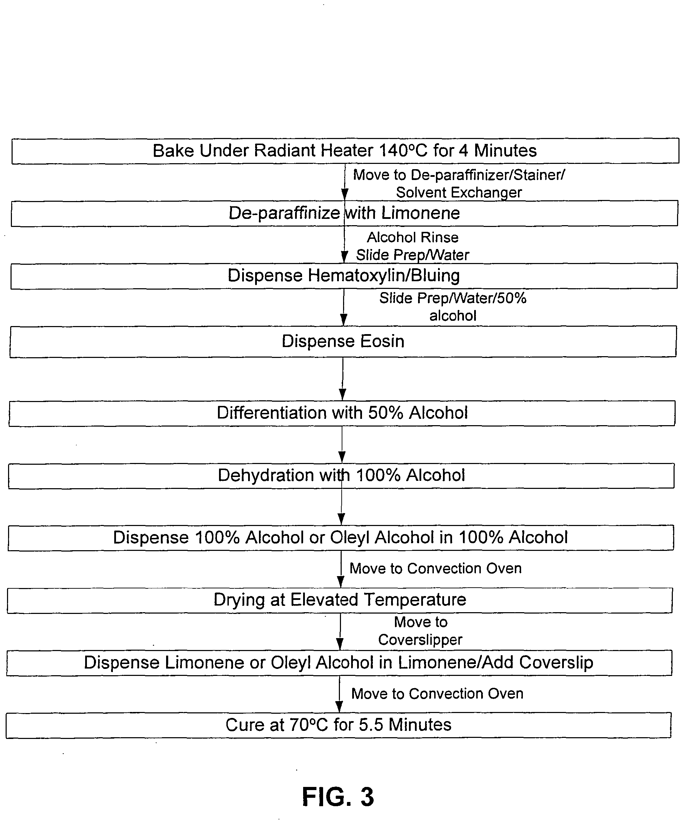

FIG. 3 shows a schematic of the automated process for this example and indicates the points in the process where the oleyl alcohol was dispensed to the slides, either in alcohol prior to moving the slides to the convection oven for evaporation of the alcohol at an elevated temperature and/or in the limonene used for coverslipping. As in Example 1, exposure of the samples to an elevated temperature (in this instance a variety of temperatures for different times) was used to remove excess alcohol from the tissue samples (alcohol- in particular ethanol - has a much lower boiling point than oleyl alcohol and is selectively removed from the slide while any oleyl alcohol added in the alcohol remains) prior to coverslipping.

The average number of nuclear drying artifacts was counted by a pathologist. The results are shown in Table 2. In Table 2, the concentration of oleyl alcohol in the 100% ethanol is indicated as the "pre-concentration" and the concentration of the oleyl alcohol in the coverslipping solvent (limonene) is indicated as "coverslipping solvent." The amount of coverslipping solvent (with or without the oleyl alcohol) is also given, as well as the temperature of the oven used to dry the samples and the amount of time the slides were dried prior to coverslipping.

**Table 2**

| Run | Oven Temperature (°C) | Pre Concentration¹ | Coverslip Concentration² | Oven Time(s) | Coverslipping Volume³ | Avg. Artifacts/ Slide |
|---|---|---|---|---|---|---|
| 1 | 70 | 2 | 0 | 60 | 100 | 6 |
| 2 | 70 | 2 | 10 | 60 | 100 | 17 |
| 3 | 70 | 2 | 10 | 60 | 100 | 23 |
| 4 | 70 | 5 | 0 | 60 | 50 | 5 |
| 5 | 70 | 8 | 0 | 60 | 50 | 1 |
| 6 | 70 | 8 | 5 | 60 | 50 | 1 |
| 7 | 85 | 8 | 5 | 60 | 50 | 6 |
| 8 | 85 | 2 | 0 | 60 | 50 | 39 |
| 9 | 85 | 2 | 5 | 30 | 50 | 135 |
| 10 | 85 | 5 | 0 | 30 | 100 | 90 |
| 11 | 85 | 5 | 10 | 60 | 50 | 57 |
| 12 | 85 | 8 | 5 | 30 | 50 | 80 |
| 13 | 85 | 8 | 10 | 60 | 100 | 4 |
| 14 | 100 | 2 | 0 | 30 | 50 | 26 |
| 15 | 100 | 2 | 5 | 60 | 50 | 4 |
| 16 | 100 | 2 | 10 | 30 | 50 | 45 |
| 17 | 100 | 5 | 0 | 60 | 50 | 18 |
| 18 | 100 | 5 | 5 | 30 | 100 | 1 |
| 19 | 100 | 5 | 5 | 60 | 100 | 2 |
| 20 | 100 | 8 | 0 | 30 | 100 | 1 |
| 21 | 100 | 8 | 0 | 30 | 100 | 0 |
| 22 | 100 | 8 | 5 | 60 | 100 | 2 |
| 23 | 100 | 8 | 10 | 30 | 100 | 2 |
| 24 | 100 | 8 | 10 | 30 | 50 | 48 |
| Positive Control | 70 | 0 | 0 | 300 | 50 | TNC^{*} |

| | | | | | | |
|---|---|---|---|---|---|---|
| ¹(% v/v; oleyl alcohol/ethanol used just prior to solvent removal in convection oven at 60°C for 2 minutes) ²(% v/v; oleyl alcohol/limonene used during coverslipping) ³(microliters limonene or oleyl alcohol/limonene dispensed to each slide during coverslipping) ^{*}Too Numerous to Count | | | | | | |

As shown in Table 2, relative to a positive control that has not been contacted with the oleyl alcohol, use of oleyl alcohol in either 100% alcohol prior to drying or in limonene during coverslipping was effective for reducing drying artifacts in all instances. This example demonstrates that nuclear drying artifacts can be substantially reduced or eliminated by addition of a lipid compound to the process. It also demonstrates that the lipid compound can protect a tissue sample from damage due to exposure to an elevated temperature under conditions that promote evaporation of solvents, or and that the lipid compound can help restore a sample that has been altered by evaporating a solvent from the sample at an elevated temperature.

### Example 3 - Coverslipping with Oleyl Alcohol

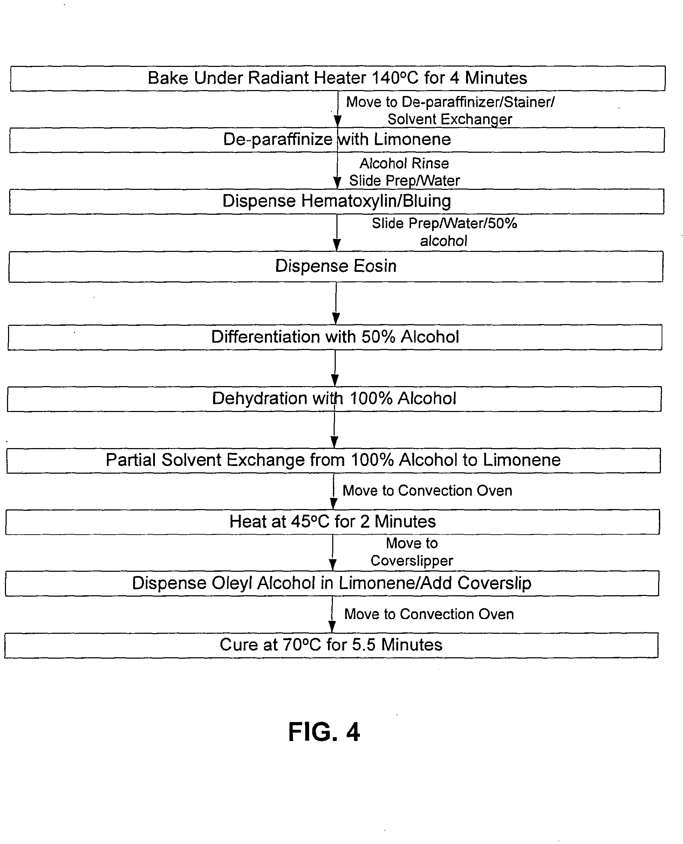

In this example, the use of a variety of different concentrations and amounts of oleyl alcohol dissolved in limonene is demonstrated for coverslipping in an automated H&E staining process. Liver and prostate tissue sections were H&E stained using the automated slide processing system described in Example 1. The particular process for this example is illustrated schematically in FIG. 4.

Oleyl alcohol in limonene was applied during the coverslipping step at the concentrations and in the amounts shown in Table 3. Stained liver tissue samples were examined by a pathologist to determine the number of nuclear drying artifacts and prostate tissue samples were scored for the amount of definition provided by the process (on a scale of 0-3 where 0 represents a level of definition produced by a typical H&E staining process that does not incorporate a lipid compound).

**Table 3**

| Run # | %(v/v) oleyl alcohol in limonene | Limonene Volume used for Coverslipping (µL) | Avg. No. of Nuclear Drying Artifacts/Liver Tissue | Increased Definition (0-3)/ Prostate Tissue |
|---|---|---|---|---|
| 1 | 15 | 30 | 0* | 3 |
| 2 | 20 | 30 | 0 | 3 |
| 3 | 25 | 30 | 0 | 3 |
| 4 | 15 | 40 | 4 | 3 |
| 5 | 20 | 40 | 12 | 3 |
| 6 | 15 | 50 | 0 | 3 |
| 7 | 25 | 50 | 0* | 3 |

| | | | | |
|---|---|---|---|---|
| ^{*}One tissue section with numerous artifacts in one particular position on slide tray excluded due to uneven coverage with reagents. | | | | |

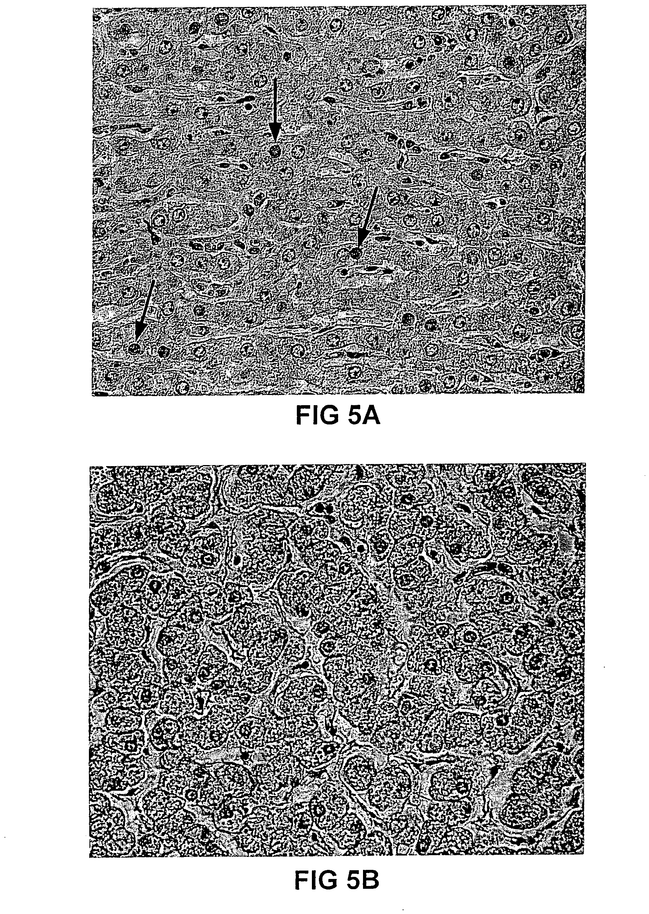

As shown in Table 3, use of oleyl alcohol in limonene during coverslipping was effective in reducing the number of drying artifacts relative to a typical positive control that was contacted with limonene alone (which typically yields nuclear drying artifacts too numerous to count). In FIG. 5, photomicrographs of brightfield microscope images show a comparison of a positive control slide (FIG. 5A) with a representative slide treated with 30 µL of 20% limonene (FIG. 5B). The increase in observed definition and the decrease in the number of artifacts provided by the lipid compound are demonstrated in the photomicrograph of FIG. 5B. Nuclear drying artifacts are shown by arrows in FIG. 5A.

### Example 4 - Special Stains

In this example, the use of oleyl alcohol dissolved in limonene is demonstrated for coverslipping samples that are stained using a variety of special stains. Slides bearing liver tissue sections are stained with Trichrome III Blue stain (Ventana Medical Systems, Inc, Tucson, AZ) using a standard protocol for the NexES^{®} automated slide staining system (Ventana Medical Systems, Inc, Tucson, AZ). Similarly, using the NexES^{®} instrument and standard protocols, slides bearing lung tissue samples containing fungus are stained with GMS fungus stain (Ventana Medical Systems, Inc, Tucson, AZ), slides bearing bone marrow samples are stained using a Giemsa stain (Ventana Medical Systems, Inc, Tucson, AZ), and slides bearing heart tissue sections are stained with Congo Red (Ventana Medical Systems, Inc, Tucson, AZ).

The stained slides bearing the liver, lung, bone marrow and heart tissue sections are loaded into a tray and coverslipped using the system described in Example 1, which in this Example is programmed to take the slide tray directly to the coverslipper. In the coverslipper, a 20% oleyl alcohol in limonene solution is applied to the slides and pre-glued coverslips are added to each of the slides. Stained samples are examined by a pathologist.

### Example 5 - Increased Definition, Color Balance and Contrast Effect Using Lipid Compounds in an Automated H&E Staining Process.

In this example, the use of a variety of lipid compounds for increasing the definition, color balance and contrast of H&E stained slides is demonstrated. The "high definition" effect was observed on slides stained using a commercial embodiment of the automated staining system described in Example 1, wherein the stained slides were treated with a lipid compound in an automated coverslipping step. A total of 17 lipid compounds were tested with a 20% oleyl alcohol/ 80% limonene mixture (see, Example 3) serving as the baseline positive control. Each reagent was run on three multi-tissue blocks containing tissue sections that include features useful for demonstrating the high definition effect. These multi-tissue blocks included thyroid papillary carcinoma, prostate carcinoma, squamous cell carcinoma, normal lung, and breast carcinoma. Thyroid papillary carcinoma features that are enhanced by the positive control include the "ground glass" nuclear appearance, nuclear grooves and nuclear pseudoinclusions. Prostate carcinoma treated with the positive control demonstrates improved visualization of the macronucleoli as well as better visualization of the basement membrane and basal cells. Features enhanced by the positive control in squamous cell carcinoma are nuclear definition, cytoplasmic keratinization, squamous pearls, intercellular bridges and distinction between apoptotic cells and mitotic cells. In normal lung, the positive control improves the visualization of cilia lining bronchial epithelium. Breast carcinoma features that are enchanced by the positive control include chromatin texture, nucleolar prominence and the clarity of mitotic figures, nuclear details that are critical in the grading of breast cancer.

### Materials and Methods:

Staining System:
Symphony^{®} Staining System, Ventana Medical Systems, Inc, Tucson, AZ.

Reagents Used (all of which are commercially available from Ventana Medical Systems, Inc, Tucson, AZ):
Symphony^{®} N1 P/N 900-201
Symphony B P/N 900-204
Symphony W P/N 900-203
Symphony C P/N 900-202
Symphony Clear P/N 900-209
Symphony E P/N 900-212
Reagent Grade Alcohol
Optisure^{®} Coverslips P/N 900-501

### Multi-tissue blocks Used:

MTB 1:
Thyroid block # 0204-192-02929 item #9
Thyroid block # 0206-341-01309 1-2
Thyroid block # 0104-192-00504 item #6
Prostate block # 0245-341-41954 2-2
Prostate block # 0205-341-001954-1-2
Prostate block # 0207-315-01329 item #3

MTB 2:
Squamous cell carcinoma A603
Squamous cell carcinoma A395
Squamous cell carcinoma 0106-192-01531 item #3
Squamous cell carcinoma B603
Lung B763
Lung B750
Lung B666

MTB3:
Breast 0112-192-01649 item #6
Breast 0206-192-02108 item #7
Breast 0112-192-1567 item #6
Breast (in situ) 0204-192-02897 item #7
Breast (in situ) 0204-192-02887 item #7
Breast (in situ) 0204-192-02859 item #7

Reagents Tested (dissolved 20% v/v or w/v in d-limonene, all of which reagent components are commercially available from Sigma-Aldrich, St. Louis, MO except for compound J, which is available from Degussa GmbH, Dusseldorf, Germany):
A: decamethylcyclopentasiloxane [siloxane]
B: octylether [C16 ether]
C: cedarwood oil [essential oils/natural oils]
D: oleylamine [C18 amine]
E: tocopherol [phenolic]
F: octanoic acid [C18 carboxylic acid]
G: Triton X-100 [non-ionic detergent]
H: linalyl acetate [ester]
I: squalene [unsaturated aliphatic]
J: ABIL EM90 [siloxane polymer]
K: poly(propylene glycol) [polyether glycol]
L: Tergitol [detergent]
M: tri(propylene glycol) butyl ether [polyether]
N: methyl oleate [C18 ester]
O: oleamide [C18 amide]
P: poly(ethylene glycol) monoleate [polyether ester]
Positive Control: oleyl alcohol
Negative Control: neat d-limonene

### Staining Methods:

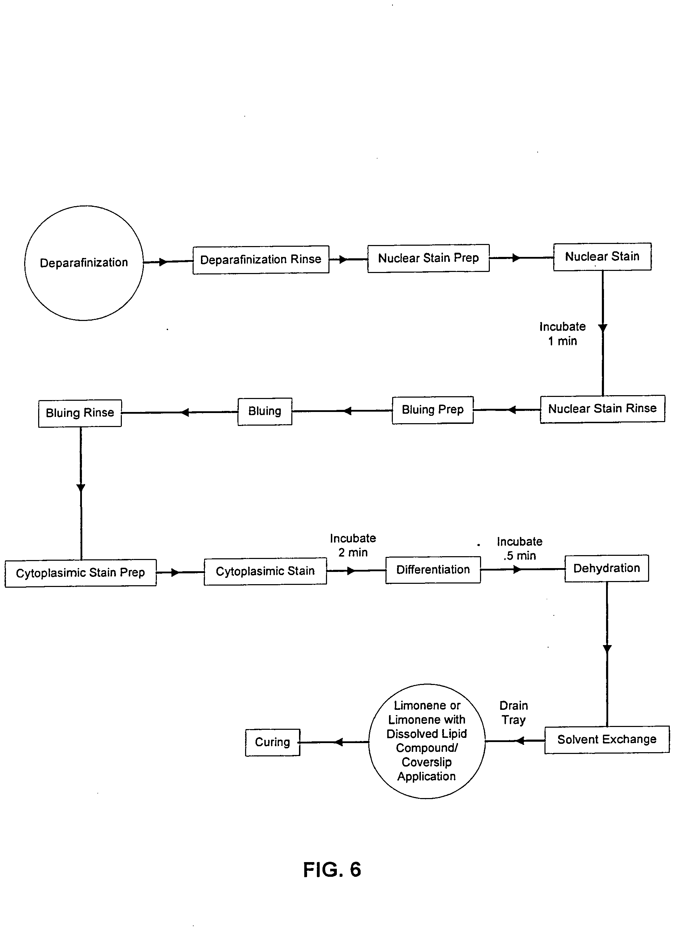

The optimized Symphony® process utilized in this Example is schematically illustrated in FIG. 6. As mentioned previously, the Symphony process can employ fresh reagent for each slide. Each of the lipid compounds was tested at the coverslipping step of the staining process. The test reagent was applied to the slide prior to the coverslip application. Slides were run through the entire staining process on the Symphony system as detailed below.

Slides are loaded onto the Universal Slide Tray and placed in the instrument Entry Portal. The appropriate staining procedure is selected (standard nuclear stain, standard cytoplasmic stain) and the run is initiated using the Touchscreen Interface. On the Symphony staining system, slides are scanned to determine their positions in the Universal Slide Tray. Slides are baked in the Slide Drying Module for tissue adherence. Following the baking step, slides are moved to the Staining Module for deparaffinization, staining, and clearing. Deparaffinization utilizes the Symphony Clear reagent which is followed by an alcohol rinse to remove excess reagent. Following deparaffinization, the steps for the standard nuclear and cytoplasmic staining intensity protocol are listed below:
1. The Symphony W reagent is applied to the slide.
2. The Symphony N1 reagent is applied followed by an incubation period.
3. The slides are rinsed with the Symphony W solution.
4. Symphony B reagent is applied to the slides and incubated.
5. The slides are rinsed with the Symphony W solution.
6. Gradient alcohol is deposited on the slides.
7. The Symphony C solution is dispensed and incubated.
8. Slides are rinsed with both gradient alcohol additions and reagent grade alcohol.
9. The slides are cleared by the Symphony Clear reagent and transported to the Slide Prep Module for the final dehydration step.
10. Slides are moved to the OptiSure Coverslip Module.
11. Symphony Clear is deposited on the slide prior to the OptiSure Coverslips for optical clarity and coverslip adhesion.
12. The slides are transported to the Slide Curing Module to secure the coverslips.
13. The Universal Slide Tray is placed in the IntelliQue for a cooling period and subsequent tray ejection.

At step 11, as part of the coverslipping process, the various lipid compound compositions were contacted with the tissue samples.

### Scoring Methods:

All scoring was performed by two board-certified pathologists. Slides prepared with each of the alternative compounds were assessed. Five tissue types (squamous cell carcinoma, normal lung, prostate carcinoma, papillary thyroid carcinoma, breast carcinoma) were scored according to the aforementioned tissue/cancer-specific metrics. All assessments were made relative to the positive control slides prepared with oleyl alcohol as follows:
   '>' indicating that the metric was increased in comparison to the positive control.
   '<' indicating that the metric was decreased in comparison to the positive control.
   '0' indicating that the metric was equivalent to the positive control.

Scoring results determined by the two pathologists are shown separately in Tables 4 and 5 below:

**Table 4**

| | **Squamous Cell Carcinoma** | | Normal Lung | Prostate Carcinoma | | Papillary Thyroid Carcinoma | Broast Carcinoma | |
|---|---|---|---|---|---|---|---|---|
| | Color Balance | Detail/Clarity | | Color Balance/Contrast | Detail/Clarity | | Color Balance/Contrast | Detail/Clarity |
| **Compound Metric** | **Vibrancy of keratinization** | **Squamous intercellular bridge clarity** | **Clarity of citia in bronchial epithelium** | **Vibrancy of connective tissue** | **Degree of nuclear detail including chromatin texture and nucleolar prominance** | **Clarity of nuclear details including ground glass appearance, nuclear grooves and nuclear pseudoinclusions** | **Contrast between carcinoma cells and stroma** | **Degree of nuclear detail including chromatin texture and nuclear prominance** |
| A | 0 | 0 | > | 0 | 0 | 0 | 0 | 0 |
| B | 0 | c | 0 | 0 | 0 | 0 | 0 | 0 |
| **C** | 0 | 0 | 0 | 0 | 0 | 0 | 0 | 0 |
| D | 0 | 0 | 0 | 0 | 0 | 0 | 0 | 0 |
| E | > | > | > | 0 | 0 | 0 | 0 | 0 |
| F | 0 | 0 | 0 | 0 | 0 | 0 | 0 | 0 |
| G | 0 | 0 | 0 | 0 | 0 | 0 | 0 | 0 |
| H | > | 0 | > | > | > | 0 | < | 0 |
| I | 0 | 0 | 0 | 0 | 0 | 0 | 0 | 0 |
| J | 0 | 0 | 0 | 0 | 0 | 0 | 0 | 0 |
| K | 0 | 0 | 0 | 0 | 0 | 0 | > | 0 |
| L | > | > | 0 | 0 | 0 | 0 | 0 | 0 |
| M | > | > | > | 0 | 0 | 0 | 0 | 0 |
| N | > | > | > | 0 | 0 | 0 | 0 | 0 |
| O | > | 0 | 0 | 0 | 0 | 0 | 0 | 0 |
| P | > | 0 | > | 0 | 0 | 0 | 0 | 0 |

| | | | | | | | | |
|---|---|---|---|---|---|---|---|---|
| * All scoring is relative to the control slides (Optimized protocol; run on Symphony instrument) > increased compared with positive control < decreased compared with positive control 0 equivalent to positive control | | | | | | | | |

**Table 5**

| | **Squamous Cell Carcinoma** | | **Normal Lung** | **Prostate Carcinoma** | | **Papillary Thyroid Carcinoma** | **Breast Carcinoma** | |
|---|---|---|---|---|---|---|---|---|
| | **Color Balance** | **Detail/Clarity** | | **Color Balance/Contrast** | **Detail/Clarity** | | **Color Balance/Contrast** | **Detail/Clarity** |
| **Compound** Metric | Vibrancy of keratinization | Squamous intercellular bridge clarity | Clarity of cilia in bronchial epithelium | Vibrancy of connective tissue | Degree of nuclear detail including chromatin texture and nucleolar prominance | Clarity of nuclear details including ground glass appearance, nuclear grooves and nuclear pseudolnclusions | Contrast between carcinoma cells and stroma | Degree of nuclear detail including chromatin texture and nucleolar prominance |
| A | > | 0 | > | 0 | 0 | 0 | 0 | 0 |
| B | 0 | 0 | 0 | 0 | 0 | 0 | 0 | 0 |
| c | 0 | 0 | 0 | 0 | 0 | 0 | 0 | 0 |
| D | 0 | 0 | 0 | 0 | 0 | 0 | 0 | 0 |
| E | 0 | 0 | 0 | 0 | 0 | 0 | 0 | 0 |
| F | 0 | 0 | 0 | 0 | 0 | 0 | 0 | 0 |
| G | 0 | 0 | 0 | 0 | 0 | 0 | 0 | 0 |
| H | > | 0 | > | > | > | 0 | < | 0 |
| I | 0 | 0 | 0 | 0 | 0 | 0 | 0 | 0 |
| J | 0 | 0 | 0 | 0 | 0 | 0 | 0 | 0 |
| K | 0 | 0 | 0 | 0 | 0 | 0 | > | 0 |
| L | 0 | 0 | 0 | 0 | 0 | 0 | 0 | 0 |
| M | 0 | 0 | 0 | 0 | 0 | 0 | 0 | 0 |
| N | > | > | > | 0 | 0 | 0 | 0 | 0 |
| O | 0 | 0 | 0 | 0 | 0 | 0 | 0 | 0 |
| P | > | > | > | 0 | 0 | 0 | 0 | 0 |

| | | | | | | | | |
|---|---|---|---|---|---|---|---|---|
| *All scoring is relative to the control slides (Optimized protocol; run on Symphony instrument) > greater than control < less than control 0 equivalent to control | | | | | | | | |

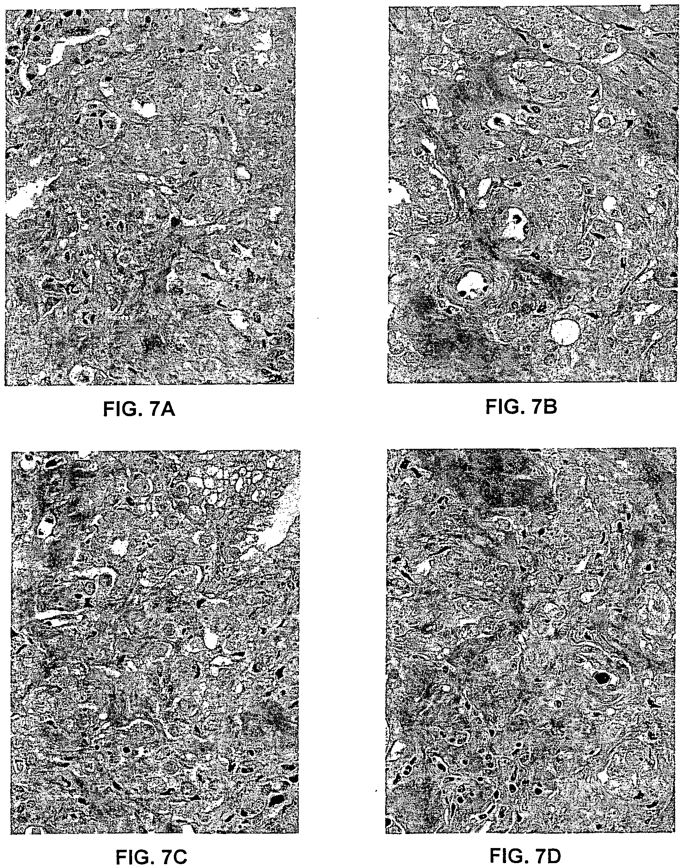

Representative brightfield microscope images (60X) showing the enhancement of membrane and nuclear detail as well as the increased contrast and improved color balance of prostate carcinoma samples treated according to the disclosure are shown in FIG. 7. FIG 7A is the negative control, FIG 7B is the positive control (oleyl alcohol, a fatty alcohol), FIG. 7C is compound H (linalyl acetate, a fatty ester), and FIG. 7D is compound O (oleamide, a fatty amide).

### Conclusion:

Overall, each of the 16 alternative compounds demonstrated equivalent performance when compared to the positive control, oleyl alcohol. Although some differences were noted by a particular pathologist for individual tissue/cancer types, no consistent changes were seen across all tissue/cancer types for any of the alternative compounds.

Although the principles of the present invention have been described with reference to several illustrative embodiments, it should be apparent to those of ordinary skill in the art that the details of the embodiments may be modified without departing from such principles. For example, although the illustrated examples include a lipid compound contacted with a sample in particular steps of a staining process, a lipid compound can be contacted with a sample during any step of a staining process. Furthermore, the disclosed method and composition can be utilized with any automated staining process or any manual staining process. Variants of the specifically illustrated staining processes can utilize different alcohol reagents (such as isopropanol) and other coverslipping solvents (such as xylene or an alkane solvent). The present invention includes all modifications, variations, and equivalents thereof as fall within the scope and spirit of the following claims.

## Claims

1. A method of processing a biological sample on a microscope slide, comprising:
treating the sample using a histochemical technique to provide a stained sample;
exposing the sample to an elevated temperature under conditions that promote evaporation of a solvent from the sample; and
contacting the sample with a lipid compound prior to, during or after exposing the sample to the elevated temperature under conditions that promote evaporation of a solvent from the sample.

2. The method of claim 1, wherein relative to a substantially similar sample that has not been contacted with the lipid compound, contacting the sample with the lipid compound reduces artefacts produced by exposing the sample.

3. The method of claim 1 or 2, wherein contacting the sample with the lipid compound increases cellular and sub-cellular definition observed in the sample.

4. The method of any of the preceding claims, wherein at least 25% of the solvent is evaporated from the sample.

5. The method of any of the preceding claims, wherein the boiling point of the lipid compound is greater than about 200°C.

6. The method of any of the preceding claims, wherein the lipid compound comprises one or more of a detergent, a fatty acid, a fatty acid ester, a fatty alcohol, a fatty amine, a fatty ether, a polysiloxane, a polyether, and an isoprenoid.

7. The method of any of the preceding claims, wherein the sample is contacted with the lipid compound after exposing the sample.

8. The method of any of the preceding claims, wherein the elevated temperature comprises a temperature of between about 35°C and about 140°C.

9. The method of any of the preceding claims, wherein the lipid compound is dissolved in an organic solvent.

10. The method of claim 9, wherein the lipid compound is dissolved in the organic solvent at a concentration from about 0.5% to about 35%.

11. The method of any of the preceding claims, wherein the process is automated.

12. The method of claim 11, wherein a plurality of samples are processed and each sample is treated with fresh reagents.

13. The method of any of the preceding claims, wherein the sample is contacted with the lipid compound after the sample has been de-paraffinized using a de-paraffinizing solvent.

14. The method of claim 13, wherein the sample is contacted with the lipid compound after the de-paraffinizing solvent has been substantially removed from the sample.

15. The method of any of the preceding claims, wherein the sample is contacted with the lipid compound after the sample has been treated with the histochemical technique.
